(19) Europäisches Patentamt
European Patent Office
Office européen des brevets

(11) EP 1 917 304 B1

(12) **EUROPEAN PATENT SPECIFICATION**

(45) Date of publication and mention of the grant of the patent:
**22.06.2011 Bulletin 2011/25**

(21) Application number: **06796850.3**

(22) Date of filing: **22.08.2006**

(51) Int Cl.:
***C08L 23/10*** *(2006.01)* ***C08F 4/642*** *(2006.01)*

(86) International application number:
**PCT/JP2006/316816**

(87) International publication number:
**WO 2007/023996 (01.03.2007 Gazette 2007/09)**

# (54) PROPYLENE BASED RESIN COMPOSITION

HARZZUSSAMMENSETZUNG AUF PROPYLENBASIS

COMPOSITION DE RÉSINE À BASE DE PROPYLÈNE

(84) Designated Contracting States:
**BE DE FR GB**

(30) Priority: **22.08.2005 JP 2005240445**

(43) Date of publication of application:
**07.05.2008 Bulletin 2008/19**

(73) Proprietor: **Mitsui Chemicals, Inc.**
**Tokyo 105-7117 (JP)**

(72) Inventors:
- **MORI, Ryoji**
  **Sodegaura-shi, Chiba 2990265 (JP)**
- **KIZU, Kouichi**
  **Sodegaura-shi, Chiba 2990265 (JP)**
- **MATSUGI, Tomoaki**
  **Sodegaura-shi, Chiba 2990265 (JP)**
- **KOJOH, Shinichi**
  **Tokyo 1057117 (JP)**

(74) Representative: **HOFFMANN EITLE**
**Patent- und Rechtsanwälte**
**Arabellastraße 4**
**81925 München (DE)**

(56) References cited:
**WO-A1-91/12285**
**JP-A- 2000 119 316**
**JP-A- 2001 181 332**
**JP-A- 2003 301 010**
**JP-A- 2004 204 057**
**JP-A- 2004 204 058**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 917 304 B1

Printed by Jouve, 75001 PARIS (FR)

## Description

### TECHNICAL FIELD

The present invention relates to a propylene based resin composition. More specifically, the invention relates to a propylene based resin composition which is suitably used in an extrusion molded product or inflation molded product such as a film, sheet and the like.

### BACKGROUND ART

In the past, a method in which an elastomer such as an ethylene/propylene copolymer and an ethylene/butene copolymer is blended to a polypropylene resin as a modifier for the purpose of improvement for impact resistance of the polypropylene resin, has been well used.

However, for many of molded articles of the polypropylene resin, heat resistance is pursued as well that no deformation or appearance change, etc. of a molded article takes place even at high temperature, in addition to impact resistance. In addition, excellent transparency at high temperature is also pursued depending on use. With the conventional method wherein an elastomer is blended as a modifier, impact resistance improved, but excellent heat resistance and transparency were difficult to obtain.

In addition, for example, in manufacturing a soft resin composition which comprises a polypropylene resin, a large amount of rubber may be blended to the polypropylene resin.

However, with just blending the elastomer such as the ethylene/propylene copolymer and the ethylene/butene copolymer in a large amount, which is publicly-known in the past, excellent rubber elasticity was not obtained, and further there is room for improvement in terms of heat resistance.

In relation to this, Patent Document 1 discloses a propylene based resin composition which comprises a polypropylene resin, a specific block copolymer, an ethylene copolymer and an inorganic filler, in order to obtain a propylene based resin composition which is excellent in balance between rigidity and tensile elongation at break, and in balance between rigidity and impact resistance.

However, with the composition described in Patent Document 1, excellent transparency was not obtained, and heat resistance was not also sufficient. In addition, a soft resin was not disclosed.

[Patent Document 1] JP-A No. 2004-204057

### DISCLOSURE OF the INVENTION

An object of the present invention is to provide a propylene based resin composition which is excellent in impact resistance and heat resistance. In addition, another object of the present invention is to provide a propylene based resin composition which is excellent in transparency as well as in impact resistance and heat resistance, and further which has hardly appearance change even at high temperature. In addition, a further another object of the present invention is to provide a composition which is excellent in flexibility and rubber elasticity as well as in heat resistance.

The present inventors have studied extensively to solve above problems, and as a result, have found that a propylene based resin composition comprising a specific propylene based polymer (A) and a specific olefin based block copolymer (B) comprising polymer segments (B1), (B1') and (B2), is excellent in impact resistance and heat resistance.

The propylene based resin composition according to the invention comprises:

[A] 1 to 99% by weight of a propylene based polymer (A) (i) having a melt flow rate (MFR: 230°C and a load of 2.16 kg) of 0.1 to 400 g/10 min, (ii) containing 0.01 to 30% by weight of the component soluble in n-decane at normal temperature having an intrinsic viscosity [$\eta$], as measured in decalin at 135°C, of 0.2 to 10 dl/g, and (iii) having pentad isotacticity ($I_5$) , as determined by $^{13}$C-NMR spectra analysis of the component insoluble in n-decane at normal temperature, of 0.95 or more; and

[B] 99 to 1% by weight of an olefin based block copolymer (B) comprising polymer segments (B1), (B1') and (B2) in which the polymer segments (B1) and (B1') are each independently a polymer of at least one monomer selected from the group consisting of ethylene and $\alpha$-olefin having 3 to 20 carbon atoms and are each independently a polymer segment of an ethylene based polymer having (i) the ethylene content of 95 to 100 mol% and (ii) a weight average molecular weight (Mw), as measured by high temperature GPC, of 2,000 to 100, 000; and in which the polymer segment (B2) is a copolymer of ethylene and at least one selected from an $\alpha$-olefin having 3 to 20 carbon atoms and is a polymer segment of an ethylene/$\alpha$-olefin copolymer having (iii) the ethylene content of 50 to 80 mol% and (iv) a weight average molecular weight (Mw), as measured by high temperature GPC, of 10,000 to 300, 000,

which olefin block copolymer is a block copolymer comprising a linear triblock structure of (B1)-(B2)-(B1') and has (v) a

peak assigned to ββ methylene in its $^{13}C$-NMR spectrum, (vi) a glass transition temperature (Tg), as measured by differential scanning calorimeter (DSC), of -50°C or less, (vii) an endothermic peak assigned to a melting point (Tm) of 105°C or more as measured by DSC, (viii) a endothermic enthalpy, as determined from a melting peak area, as measured by DSC, in the range of 20 to 60 J/g, (ix) a density of 0.870 to 0.910 g/cm$^3$, (x) a melt flow rate (MFR: 190°C and a load of 2.16 kg) in the range of 0.3 to 50 g/10 min, and (xi) a ratio (($G'_{50}$°C) / ($G'_{100}$°C)) of a storage elastic modulus at room temperature ($G'_{50}$°C) to a storage elastic modulus at 100°C ($G'_{100}$°C), as determined by solid viscoelasticity measurements, of 1.0 to 2.0 (wherein the total amount of the propylene based polymer (A) and the olefin based block copolymer (B) is 100% by weight). Further, the resin composition is sometimes referred to as the "first composition".

In addition, the propylene based resin composition according to the invention preferably comprises 40 to 99% by weight of the propylene based polymer (A) and 60 to 1% by weight of the olefin based block copolymer (B) (wherein the total amount of the propylene based polymer (A) and the olefin based block copolymer (B) is 100% by weight), and does not substantially contain an inorganic filler (D).

In addition, the propylene based resin composition according to the invention preferably comprises 1% by weight or more and less than 40% by weight of the propylene based polymer (A) and more than 60% by weight and 99% by weight or less of the olefin block copolymer (B) (wherein the total amount of the propylene based polymer (A) and the olefin based block copolymer (B) is 100% by weight).

The polymer segments (B1), (B1') and (B2) are preferably obtained by polymerization in the presence of a catalyst for olefin polymerization comprising a transition metal compound represented by the following formula (1):

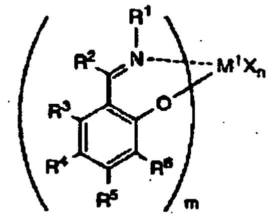

··· (1)

wherein $M^1$ represents a transition metal atom selected from Groups 4 to 5 of the Periodic Table, m represents 1 or 2, $R^1$ represents an aromatic hydrocarbon group, an aliphatic hydrocarbon group or an alicyclic hydrocarbon group wherein in the case that $R^1$ is a phenyl group, it has at least one substituent which is selected from heteroatoms and heteroatom-containing groups in at least one position of Positions 2 and 6, or it has at least one substituent which is selected from a heteroatom excluding a fluorine atom, a fluorine-containing group which contains one carbon atom and two or less fluorine atoms, a fluorine-containing group which contains two or more carbon atoms and a group which contains a heteroatom excluding a fluorine atom, in at least one position of Positions 3 to 5, when the location of the carbon atom which is bonded to the nitrogen is taken as Position 1, and in the case that $R^1$ is an aromatic hydrocarbon group other than a phenyl group, an aliphatic hydrocarbon group or an alicyclic hydrocarbon group, it has at least one substituent which is selected from heteroatoms and heteroatom-containing groups, $R^2$ to $R^5$ represent independently a hydrogen atom, a halogen atom, a halogen-containing group, a hydrocarbon group, a hydrocarbon-substituted silyl group, an oxygen-containing group, a nitrogen-containing group or a sulfur-containing group, which may be the same or different from each other, $R^6$ represents a halogen atom, a halogen-containing group, a hydrocarbon group or a hydrocarbon-substituted silyl group, n is a number which satisfies the valence of M, X represents an oxygen atom, a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group or a tin-containing group, and in the case that n is 2 or more, the plural groups represented by X may be the same or different from each other, and may be bonded to each other to form a ring.

The molded product according to the invention preferably comprises the above-mentioned propylene based resin composition.

In addition, the above-mentioned molded product is preferably the extrusion molded product or inflation molded product, and the molded product is preferably the film or sheet.

In addition, the above-mentioned molded product is more preferably the molded product for medical use or molded product for food packaging.

The propylene based resin composition according to the invention ("second composition") comprises:

[A] 1 to 99% by weight of a propylene based polymer (A) (i) having a melt flow rate (MFR: 230°C and a load of 2.16 kg) of 0.1 to 400 g/10 min, (ii) containing 0.01 to 30% by weight of the component soluble in n-decane at normal

temperature having an intrinsic viscosity [η] , as measured in decalin at 135°C, of 0.2 to 10 dl/g, and (iii) having pentad isotacticity ($I_5$), as determined by $^{13}$C-NMR spectra analysis of the component insoluble in n-decane at normal temperature, of 0.95 or more; and

[BB] 99 to 1% by weight of an olefin based block copolymer (BB) comprising polymer segments (B1), (B1') and (B2) in which the polymer segments (B1) and (B1') are each independently a polymer of at least one monomer selected from the group consisting of ethylene and α-olefin having 3 to 20 carbon atoms and are each independently a polymer segment of an ethylene based polymer having (i) the ethylene content of 95 to 100 mol% and (ii) a weight average molecular weight (Mw), as measured by high temperature GPC, of 2,000 to 100,000; and in which the polymer segment (B2) is a copolymer of ethylene and at least one selected from an α-olefin having 3 to 20 carbon atoms and is a polymer segment of an ethylene/α-olefin copolymer having (iii) the ethylene content of 50 to 80 mol% and (iv) a weight average molecular weight (Mw), as measured by high temperature GPC, of 10,000 to 300,000,

which olefin block copolymer has (v) a peak assigned to ββ methylene in its $^{13}$C-NMR spectrum, (vi) a glass transition temperature (Tg), as measured by differential scanning calorimeter (DSC), of -50°C or less, (vii) an endothermic peak assigned to a melting point (Tm) of 105°C or more as measured by DSC, (viii) a endothermic enthalpy, as determined from a melting peak area, as measured by DSC, in the range of 20 to 60 J/g, (ix) a density of 0.870 to 0.910 g/cm$^3$, (x) a melt flow rate (MFR: 190°C and a load of 2.16 kg) in the range of 0.3 to 50 g/10 min, and (xi) a ratio ( ($G'_{50}$°C) / ($G'_{100}$°C)) of a storage elastic modulus at room temperature ($G'_{50}$°C) to a storage elastic modulus at 100°C ($G'_{100}$°C), as determined by solid viscoelasticity measurements, of 1.0 to 2.0 (wherein the total amount of the propylene based polymer (A) and the olefin based block copolymer (BB) is 100% by weight).

The molded product according to the invention preferably comprises the above-mentioned propylene based resin composition ("second composition").

## EFFECTS OF the INVENTION

According to the propylene based resin compositions according to the invention, excellent impact resistance and heat resistance are obtained. In addition, according to the polypropylene resin compositions according to the invention, excellent transparency as well as impact resistance and heat resistance are obtained, and further which has hardly appearance change even at high temperature. In addition, according to the propylene based resin compositions according to the invention, excellent flexibility and rubber elasticity as well as heat resistance are obtained.

The above-mentioned propylene based resin compositions are suitably used in various molded products, and particularly, these compositions are suitably used in various uses as the extrusion molded product and the inflation molded product.

## BEST Mode FOR CARRYING OUT the INVENTION

Hereinafter, the present invention will be specifically explained.

<Propylene based polymer (A)>

In the invention, a propylene based polymer (A) having the following properties is used. This propylene based polymer (A) may be any one of homopolypropylene, a propylene block copolymer and a propylene random copolymer as long as if it has the following characteristics, but is preferably homopolypropylene or the propylene block copolymer.

A melt flow rate (MFR; ASTM D1238, 230°C and a load of 2.16 kg) of this propylene based polymer (A) is preferably 0.1 to 400 g/10 min, preferably 0.1 to 200 g/10 min. If a MFR value is in the above-mentioned range, a propylene based resin composition is obtained which is excellent in fluidity, and makes it possible to mold a large product as well. If the MFR value is more than 400 g/10 min, impact resistance (IZ impact strength) of the moulded product may be low.

The propylene based polymer (A) contains the component insoluble in n-decane at normal temperature (23°C) and the component soluble in n-decane at normal temperature (23°C). The former is a high-crystalline polypropylene component (isotactic polypropylene) of the propylene polymer. The latter is a rubber component, and it is preferably an atactic polypropylene or ethylene/propylene polymer. When the propylene based polymer (A) is propylene block copolymer, it is preferably formed from the high-crystalline polypropylene component (crystalline component) and the ethylene/propylene copolymer (rubber component).

The propylene based polymer (A) used in the invention desirably contains the component soluble in n-decane at normal temperature (rubber part) in an amount of 0.01 to 30% by weight, preferably 0.1 to 30% by weight and more preferably 0.1 to 2.0% by weight. In addition, the propylene based polymer (A) desirably contains the component insoluble in n-decane at normal temperature (crystalline component) in an amount of 99.99 to 70% by weight, preferably 99.9 to

70% by weight and more preferably 99.9 to 80% by weight. If the content of the component soluble in n-decane at normal temperature is less than 0.01% by weight, the improvement effect for impact resistance may not be exerted sufficiently, and on the other hand, if it is over 30% by weight, rigidity may not be sufficient.

An intrinsic viscosity [η] of this component soluble in n-decane at normal temperature (135°C, measured in decalin) is preferably 0.2 to 10 dl/g, more preferably 0.2 to 8 dl/g.

The above-mentioned component soluble in n-decane at normal temperature desirably contains a unit derived from ethylene in an amount of 30 to 50 mol%, preferably 30 to 45 mol%.

The component soluble in n-decane at normal temperature of the propylene based polymer (A) may contain a unit derived from a polymerizable compound other than ethylene and propylene within a range where the object of the present invention is not damaged. Specific examples of other polymerizable compounds include an α-olefin such as 1-butene, 1-pentene, 1-hexene, 1-heptene, 1-octene, 1-decene, 1-dodecene, 1-hexadodecene and 4-methyl-1-pentene; a vinyl compound such as vinylcyclopentene, vinylcyclohexane and vinylnorbornane; vinyl ester such as vinyl acetate; an unsaturated organic acid such as maleic anhydride or a derivative thereof and the like.

The content of the component soluble in n-decane at normal temperature of the propylene based polymer (A) is measured as follows. First, 5 g of the sample (propylene based polymer (A)) is soaked in 200 cc of boiling n-decane for 5 hours to be dissolved, and then cooled to room temperature (23°C). The precipitated solid phase is filtered by a G4 glass filter. Then, it is calculated back from the solid phase weight measured as dried.

As described above, the component insoluble in n-decane at normal temperature is a high-crystalline polypropylene component (isotactic polypropylene) of the propylene based polymer (A). Pentad isotacticity ($I_5$) of the component insoluble in n-decane at normal temperature, which is determined by a $^{13}$C-NMR method, is preferably 0.95 or more, more preferably 0.97 or more. If the pentad isotacticity ($I_5$) is in the above-mentioned range, the composition having excellent rigidity is obtained.

A pentad isotacticity ($I_5$) is an isotactic fraction at the pentad unit in the polypropylene molecule chain, which is measured by the $^{13}$C-NMR method (magnetic nuclear resonance method) (A. Zambelli, et al., Macromolecules 6, 925 (1973)), a fraction of a propylene monomer unit where five propylene units are continuously and isotactically bonded.

Assignment of the peak in the NMR measurement as described above is performed based on description of Macromolecules 8, 687 (1975). In addition, $^{13}$C-NMR can improve the signal detection limit to 0.001 by accumulated measurements of 20000 times at 125 MHz of frequency with the use of a Fourier transform NMR (500 MHz (in hydrogen measurement)) apparatus.

In addition, if the propylene based polymer (A) used in the invention contains a homopolymer or copolymer of 3-methyl-1-butene, 3,3-dimethyl-1-butene, 3-methyl-1-pentene, 3-methyl-1-hexene, 3,5,5-trimethyl-1-hexene, vinylcyclopentene, vinylcyclohexane and vinylnorbornane or the like, as a prepolymer which is formed, for example, by prepolymerization, the crystallization rate of the propylene based polymer (A) is high.

The propylene based polymer (A) is manufactured by various methods, and for example, it can be manufactured with the use of a known stereoregular catalyst. Specifically, it is manufactured with the use of a catalyst which is formed from a solid titanium catalyst component and an organic metal compound catalyst component, and further an electron donor, if necessary.

Specific examples of the above-mentioned solid titanium catalyst component includes a solid titanium catalyst component wherein titanium trichloride or a titanium trichloride composition is supported on a support which has the specific surface area of 100 $m^2/g$ or more; a solid titanium catalyst component which contains magnesium, halogen, an electron donor (preferably an aromatic carboxylic acid ester or alkyl group-containing ether) and titanium as an essential component, wherein these essential components are supported on a support which has the specific surface area of 100 $m^2/g$ or more. Among them, the latter solid titanium catalyst component is preferred.

The above-mentioned organic mental compound catalyst component is preferably an organic aluminum compound, and specific examples of the organic aluminum compound includes trialkylaluminum, dialkylaluminum halide, alkylaluminum sesquihalide, alkylaluminum dihalide and the like. Furthermore, this organic aluminum compound may be suitably selected depending on the kind of the titanium catalyst component to be used.

The above-mentioned electron donor includes, for example, an organic compound containing a nitrogen atom, a phosphorus atom, a sulfur atom, a silicon atom, a boron atom and the like, and specifically an ester compound, an ether compound or the like containing the atom as described above is suitably used.

Such catalyst may be further activated by a method such as co-grinding, and in addition, the above-mentioned olefin may be prepolymerized.

<Olefin based block copolymer (B)>

Next, an olefin based block copolymer (B) used in the invention will be explained. Herein, the block copolymer refers to a copolymer in a form that polymer chains (polymer segments), which are different in the primary structure of a polymer such as monomer species, comonomer species, comonomer composition, comonomer content, comonomer

arangement and stereoregularity, are linked in two or more kinds in one molecular chain. The olefin based block copolymer (B) used in the invention comprises polymer segments (B1) and (B1') of an ethylene based polymer, which are obtained by polymerizing at least one monomer selected from the group consisting of ethylene and α-olefin having 3 to 20 carbon atoms, and a polymer segment (B2) of an ethylene/α-olefin copolymer, which are obtained by polymerizing ethylene and at least one selected from α-olefins having 3 to 20 carbon atoms. The above-mentioned polymer segments (B1) and (B1') may be the same or different from each other.

The polymer segments (B1) and (B1') of the ethylene based polymer may be an ethylene homopolymer, a homopolymer of a monomer selected from an α-olefin having 3 to 20 carbon atoms, or a copolymer obtained by polymerization of ethylene and one or two or more monomers selected from an α-olefin having 3 to 20 carbon atoms.

The polymer segment (B2) of the ethylene/α-olefin copolymer may be a copolymer obtained by polymerization of ethylene and one selected from an α-olefin having 3 to 20 carbon atoms, or a copolymer obtained by polymerization of ethylene and two or more monomers selected from an α-olefin having 3 to 20 carbon atoms.

The α-olefin having 3 to 20 carbon atoms include, for example, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 1-octene, 3-ethyl-1-hexene, 1-octene, 1-decene, 1-dodecene, 1-tetradecene, 1-hexadecene, 1-octadecene, 1-eicocene and the like.

Among them, the above-mentioned polymer segments (B1) and (B1') are preferably the ethylene homopolymer or copolymer of ethylene and one selected from propylene, 1-butene, 1-hexene and 1-octene, more preferably the ethylene homopolymer. The above-mentioned polymer segment (B2) is preferably a copolymer of ethylene and one selected from propylene, 1-butene, 1-hexene and 1-octene.

Hereinafter, the composition and the molecular weight of each polymer segment, and physical properties and a preparation method of the.olefin based block copolymer (B) comprising these polymer segments will be specifically explained.

(i) Ethylene content of polymer segments (B1) and (B1')

The ethylene content of the polymer segments (B1) and (B1') is preferably 95 to 100 mol%, more preferably 97 to 100 mol%. If the ethylene content is less than 95 mol%, rigidity may be reduced when blended to the propylene polymer.

(ii) Molecular weight of polymer segments (B1) and (B1')

For the polymer segments (B1) and (B1'); a weight average molecular weight (in terms of polystyrene), as measured by high temperature GPC, is preferably in the range of 2,000 to 100,000, more preferably in the range of 5,000 to 80,000, and even more preferably in the range of 10,000 to 60,000.

(iii) Ethylene content of polymer segment (B2)

The ethylene content of the polymer segment (B2) is preferably 50 to 80 mol%, more preferably 55 to 70 mol%. If the ethylene content is less than 50 mol%, rigidity may be reduced when blended to the propylene based polymer (A), and if it is more than 80 mol%, impact resistance may be largely reduced when blended to the propylene based polymer (A).

(iv) Molecular weight of polymer segment (B2)

For the polymer segment (B2), a weight average molecular weight (in terms of polystyrene) as measured by high temperature GPC is preferably in the range of 10,000 to 300, 000, more preferably.in the range of 50,000 to 250,000, and even more preferably in the range of 100, 000 to 200,000.

(v) ββ methylene in olefin based block copolymer (B)

The olefin based block copolymer (B) has a peak which is assigned to ββ methylene in $^{13}C$-NMR spectrum. Herein, ββ methylene in $^{13}C$-NMR spectrum means methylene carbon which is in a β-Position of two tertiary carbons as shown in the following formula (2):

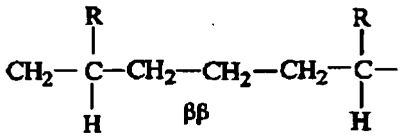

(2)

$^{1}$ C-NMR spectrum of the olefin based block copolymer (B) is measured with the use of an NMR measurement apparatus (for example, JEOL-GX270 manufactured by JEOL, Ltd. and the like). The measurement is performed with the use of a mixed solution of hexachlorobutadiene/$d_6$-benzene = 2/1 (volume ratio) which is adjusted to have 5% by weight of the sample concentration, on the base of 67.8 MHz, 25°C and $d_6$-benzene (128 ppm). The measured $^{13}$C-NMR spectrum is analyzed according to Analysis Chemistry, 43, p1245 (1971) by Lindemane Adams, Review Macromolecular Chemistry Physics, C29, 201 (1989) by JC Randall.

If the peak assigned to ββ methylene is not observed, it means molecular chain has a blocky segment of ethylene and α-olefin at high level. Therefore, it represents that distribution of ethylene and the α-olefin is not uniform, and the composition distribution is broad.

(vi) Glass transition temperature of olefin based block copolymer (B)

For the olefin based block copolymer (B), a glass transition temperature as measured by differential scanning calorimeter (DSC) is preferably -50°C or less, more preferably -55°C or less, and even more preferably - 60°C or less.

(vii) Melting point of olefin based block copolymer (B)

For the olefin based block copolymer (B), an endothermic peak attributable to a melting point, as measured by differential scanning calorimeter (DSC), is present at preferably 105°C or more, more preferably 110°C or more, and even more preferably 115°C or more.

(viii) Endothermic enthalpy of olefin based block copolymer (B)

For the olefin based block copolymer (B), a endothermic enthalpy, which is determined from a melting peak area as measured by differential scanning calorimeter (DSC), is preferably in the range of 20 to 80 J/g, more preferably in the range of 20 to 60 J/g, and even more preferably in the range of 30 to 50 J/g.

(ix) Density of olefin based block copolymer (B)

For the olefin based block copolymer (B), a density is preferably in the range of 0.870 to 0.910 g/$cm^3$ and more preferably in the range of 0.875 to 0.900 g/$cm^3$.

(x) Melt flow rate of olefin based block copolymer (B)

For the olefin based block copolymer (B), a melt flow rate (MFR; ASTM D1238, 190°C and a load of 2.16 kg) is preferably in the range of 0.3 to 50 g/10 min and more preferably in the range of 0.8 to 20 g/10 min.

(xi) Viscoelasticity behavior of olefin based block copolymer (B)

For the olefin based block copolymer (B), the ratio ($G'_{50.}/G'_{100}$°C) of a storage elastic modulus at room temperature ($G'_{50}$°C) to a storage elastic modulus at 100°C ($G'_{100}$°C) , as determined by solid viscoelasticity measurement, is 1.0 to 2.0.

In addition, the olefin based block copolymer (B) is an olefin block copolymer comprising the polymer segments (B1) and (B1') and (B2). The structure that the olefin based block copolymer (B) includes, for example, (B1) - (B2) , (B1)-(B2)- (B1'), (B1) - (B2) - (B1') - (B2) - (B1) and the like. Herein, (B1) and (B1') may be the same or different from each other.

The olefin based block copolymer (B) is an olefin block copolymer comprising the polymer segments (B1), (B1') and (B2), preferably comprising a triblock structure of (B1)-(B2)-(B1'), and is more preferably a triblock structure of (B1) - (B2) - (B1').

The olefin based block copolymer (B) used in the invention preferably has a homogeneous monomer composition in the same polymer segment, but it may be a tapered polymer wherein the composition of the comonomer changes

continuously in gradated manner within the range that physical properties of the polymer segments are not modified remarkably.

In addition, for the olefin based block copolymer (B), the ratio (Mw/Mn) of a weight average molecular weight Mw to a number average molecular weight Mn, which are obtained by high temperature GPC measurement, is preferably 3.0 or less, more preferably 2.0 or less, and even more preferably 1.5 or less. If the molecular weight distribution is broad, modification performance may be reduced by gelation of high molecular weight polymers.

The olefin based block copolymer (B) used in the invention may have a functional group on the terminal of the main chain. In addition, the olefin based block copolymer (B) may be further bonded to a part having a structure other than the above-mentioned structure if it has the structure as described above within the range where the object of the present invention is not damaged. In addition, the olefin based block copolymer (B) may be graft modified.

The above-mentioned functional group to be used includes preferably an aromatic hydrocarbon group, a halogen atom, an oxygen-containing group, a nitrogen-containing group, a sulfur-containing group, a phosphorus-containing group, a metal atom-containing group and the like.

The above-mentioned aromatic hydrocarbon group includes, for example, phenyl, naphthyl, tolyl, biphenyl, anthryl and the like, and the halogen atom includes fluorine, chlorine, bromine and iodine.

The above-mentioned oxygen-containing group is, for example, a group containing 1 to 5 oxygen atoms in the group, which does not include a heterocyclic compound residue described below. In addition, the above-mentioned oxygen-containing group may contain atoms such as a nitrogen atom, a sulfur atom, a phosphorus atom or a halogen atom as long as such atoms are not directly bonded to the oxygen atom. The above-mentioned oxygen-containing group includes specifically a hydroxy group; an alkoxy group such as methoxy, ethoxy, propoxy and butoxy; an aryloxy group such as phenoxy, methylphenoxy, dimethylphenoxy and naphthoxy; an arylalkoxy group such as phenylmethoxy and phenylethoxy; an acetoxy group; a carbonyl group; a carboxyl group; an ester group; an acetyl group and the like. In the case that the above-mentioned oxygen-containing group has a carbon atom, the number of the carbon atoms is preferably in the range of 1 to 30, more preferably in the range of 1 to 20.

The above-mentioned nitrogen-containing group is, for example, a group containing 1 to 5 nitrogen atoms in the group, which does not include a heterocyclic compound residue described below. The above-mentioned nitrogen-containing group includes specifically an amino group; an alkylamino group such as methylamino, dimethylamino, ethylamino, propylamino, butylamino and cyclohexylamino; an arylamino group such as phenylamino, tolylamino, naphthylamino and the like.

The above-mentioned sulfur-containing group is, for example, a group containing 1 to 5 sulfur atoms in the group, which does not include a heterocyclic compound residue described below. Specific examples of the above-mentioned sulfur-containing group include a sulfonate group such as methyl sulfonate, trifluoromethane sulfonate, phenyl sulfonate, benzyl sulfonate, p-toluene sulfonate, trimethylbenzene sulfonate, triisobutylbenzene sulfonate, p-chlorobenzene sulfonate and pentafluorobenzene sulfonate; a sulfinate group such as methyl sulfinate, phenyl sulfinate, benzyl sulfinate, p-toluene sulfinate, trimethylbenzene sulfinate and pentafluorobenzene sulfinate; an alkylthio group; an arylthio group and the like. In the case that the above-mentioned sulfur-containing group has carbon atoms, the number of the carbon atoms is preferably in the range of 1 to 30, more preferably in the range of 1 to 20.

The above-mentioned phosphorus-containing group is, for example, a group containing 1 to 5 phosphorus atoms in the group. Specific examples of the above-mentioned phosphorus-containing group include a trialkylphosphine group such as trimethylphosphine, tributylphosphine and tricyclohexylphosphine; a triarylphosphine group such as triphenylphosphine and tritolylphosphine; a phosphite group (a phosphido group) such as methylphosphite, ethylphosphite and phenylphosphite; a phosphonic acid group; a phosphinic acid group and the like.

The above-mentioned metal atom-containing group includes, for example, a group which contains an atom such as silicon, aluminum, boron, zinc and magnesium, a metal atom such as lithium and the like, and specifically, a silicon-containing group, an aluminum-containing group, a boron-containing group, a zinc-containing group, a magnesium-containing group, a lithium atom and the like.

The above-mentioned silicon-containing group is, for example, a group which contains 1 to 5 silicon atoms in the group. Specific examples of the above-mentioned silicon-containing group include a hydrocarbon-substituted silyl group such as phenylsilyl, diphenylsilyl, trimethylsilyl, triethylsilyl, tripropylsilyl, tricyclohexylsilyl, triphenylsilyl, tritolylsilyl, trinaphthylsilyl and methyldiphenylsilyl; an alkyl-substituted silyl ether group such as trimethylsilyl ether; a silicon-substituted alkyl group such as trimethylsilylmethyl; a silicon-substituted aryl group such as trimethylsilylphenyl; a hydrocarbon-substituted siloxy group such as trimethylsiloxy and the like: More specifically, the above-mentioned hydrocarbon-substituted silyl group is preferably a trialkylsilyl group such as trimethylsilyl, triethylsilyl, tripropylsilyl .and tricyclohexylsilyl.

The above-mentioned aluminum-containing group is, for example, a group which contains 1 to 5 aluminum atoms in the group. The above-mentioned aluminum-containing group includes specifically $-AlR_2$ group (R represents hydrogen, an alkyl group, an optionally-substituted aryl group, a halogen atom and the like).

The above-mentioned boron-containing group is, for example, a group which contains 1 to 5 boron atoms in

the group. The above-mentioned boron-containing group includes specifically $-BR_2$ group (R represents hydrogen, an alkyl group, an optionally-substituted aryl group, a halogen atom and the like.).

The above-mentioned zinc-containing group is, for example, a group which contains 1 to 3 zinc atoms in the group. The above-mentioned zinc-containing group includes specifically -ZnR group (R represents hydrogen, an alkyl group, an optionally-substituted aryl group, a halogen atom and the like.).

The above-mentioned magnesium-containing group is, for example, a group which contains 1 to 3 magnesium atoms in the group. The above-mentioned magnesium-containing group includes specifically -MgR group (R represents hydrogen, an alkyl group, an optionally-substituted aryl group, a halogen atom and the like.).

Such olefin based block copolymer (B) containing a functional group on the terminal of the main chain is suitably used in applications such as various additives such as a compatibilizer, a paint and an adhesive, in addition to a resin modifier.

Next, the preparation method of the olefin based block copolymer (B) will be explained.

In preparation of the olefin based block copolymer (B), the transition metal compound (Q) represented by the above-mentioned formula (1) may be used alone as an olefin polymerization catalyst, or the transition metal compound (Q) may be used in combination of at least one compound selected from

(R) (R-1) an organic metal compound,
(R-2) an organic aluminumoxy compound, and
(R-3) a compound which forms an ion pair by reaction with the transition metal compound (Q) as the olefin polymerization catalyst.

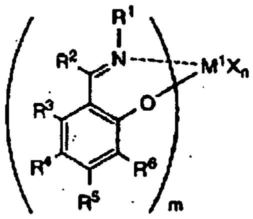

··· (1)

In the above-mentioned formula (1), $M^1$ represents a transition metal atom selected from Groups 4 to 5 of the Periodic Table, m represents 1 or 2, $R^1$ represents an aromatic hydrocarbon group, an aliphatic hydrocarbon group or an alicyclic hydrocarbon group wherein in the case that $R^1$ is a phenyl group, it has at least one substituent which is selected from heteroatoms and heteroatom-containing groups in at least one position of Positions 2 and 6 (in this case, it may have at least one atom or group which are selected from heteroatoms and heteroatom-containing groups, in a position other than the location selected from Positions 2 and 6), or it has at least one substituent which is selected from a heteroatom excluding a fluorine atom, a fluorine-containing group which contains one carbon atom and two or less fluorine atoms, a fluorine-containing group which contains two or more carbon atoms, and a group which contains a heteroatom excluding a fluorine atom, in at least one position of Positions 3 to 5 (in this case, it may have at least one atom or group which are selected from heteroatoms (it may be a fluorine atom) and heteroatom (it may be a fluorine atom)-containing groups, in a position other than the location selected from Positions 3 to 5), when the location of the carbon atom which is bonded to the nitrogen is taken as Position 1, and in the case that $R^1$ is an aromatic hydrocarbon group other than a phenyl group, an aliphatic hydrocarbon group or an alicyclic hydrocarbon group, it has at least one substituent which is selected from heteroatoms and heteroatom-containing groups, $R^2$ to $R^5$ represent independently a hydrogen atom, a halogen atom, a halogen-containing group, a hydrocarbon group, a hydrocarbon-substituted silyl group, an oxygen-containing group, a nitrogen-containing group or a sulfur-containing group, which may be the same or different from each other, $R^6$ represents a halogen atom, a halogen-containing group, a hydrocarbon group or a hydrocarbon-substituted silyl group, n is a number which satisfies the valence of M, X represents an oxygen atom, a hydrogen atom, a halogen atom, a hydrocarbon group, an oxygen-containing group, a sulfur-containing group, a nitrogen-containing group, a boron-containing group, an aluminum-containing group, a phosphorus-containing group, a halogen-containing group, a heterocyclic compound residue, a silicon-containing group, a germanium-containing group or a.tin-containing group, and in the case that n is 2 or more, the plural groups represented by X may be the same or different from each other, and may be bonded to each other to form a ring.

Among them, $M^1$ is more preferably a Ti atom. In addition, $R^1$ is more preferably an aromatic hydrocarbon group, even more preferably a phenyl group. In the case that $R^1$ is a phenyl group, it has more preferably heteroatoms at all of the places of Positions 2 to 6, respectively when the location of the carbon atom which is bonded to the nitrogen is taken as Position 1, and the heteroatom is even more preferably a fluorine atom. In addition, $R^2$ to $R^5$ are more

preferably each independently a hydrogen atom, a halogen atom, a hydrocarbon group having 1 to 4 carbon atoms. $R^6$ is preferably a halogen atom or a hydrocarbon group having 1 to 4 carbon atoms. X is more preferably a halogen atom.

Such transition metal compound includes, for example, the corresponding compounds among those described in pages 104 to 107 of the publication pamphlet of WO 2001/55231.

In the case that the transition metal compound (Q) is combined with the component (R), the transition metal compound (Q) forms a compound represented by the following formula (3) in the polymerization system.

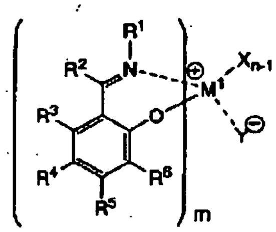 ... (3)

In the above-mentioned formula (3), $R^1$ to $R^6$, $M^1$, m, n and X are the same as described for $R^1$ to $R^6$, $M^1$, m, n and X in the above-mentioned formula (1), and Y represents the so-called weak coordination anion. In the above-mentioned formula (3), the bond of the metals M and Y may be either a covalent bond or an ion bond.

Y includes, for example, the weak coordination anion which is described in

(1) Chemical Review, Vol. 88, p. 1405 (1988),
(2) Chemical Review, Vol. 93, p. 927 (1993), and
(3) WO98/30612, p. 6

and the like, and specifically

$AlR_4^-$

(R may be the same or different from each other, and represents an oxygen atom, a nitrogen atom, a phosphorus atom, a hydrogen atom, a halogen atom or a substituent which contains them; an aliphatic hydrocarbon group, an aromatic hydrocarbon group or an alicyclic hydrocarbon group; an aliphatic hydrocarbon group, an aromatic hydrocarbon group or an alicyclic hydrocarbon group, which is substituted with an oxygen atom, a nitrogen atom, a phosphorus atom or a halogen atom; or an aliphatic hydrocarbon group, an aromatic hydrocarbon group or an alicyclic hydrocarbon group, which is substituted with a substituent containing an oxygen atom, a nitrogen atom, a phosphorus atom or a halogen atom),

$BR_4^-$ (R may be the same or different from each other, and represents an oxygen atom, a nitrogen atom, a phosphorous atom, a halogen atom or a substituent which contains them; an aliphatic hydrocarbon group, an aromatic hydrocarbon group or an alicyclic hydrocarbon group; an aliphatic hydrocarbon group, an aromatic hydrocarbon group or an alicyclic hydrocarbon group, which is substituted with an oxygen atom, a nitrogen atom, a phosphorus atom or a halogen atom; or an aliphatic hydrocarbon group, an aromatic hydrocarbon group or an alicyclic hydrocarbon group, which is substituted with a substituent containing an oxygen atom, a nitrogen atom, a phosphorus atom or a halogen atom), $PF_6^-$, $SbF_5^-$, trifluoromethane sulfonate, p-toluene sulfonate and the like.

In polymerization of the olefin based block copolymer (B), ethylene and an $\alpha$-olefin having 3 to 20 carbon atoms are subjected to copolymerization in the presence of the catalyst for olefin polymerization as described above to give a polymer. The $\alpha$-olefin having 3 to 20 carbon atoms includes the same those as described above.

In polymerization of the olefin based block copolymer (B), any of a liquid-phase polymerization method such as solution polymerization and suspension polymerization, and a gas phase polymerization method may be used.

Specific examples of the inert hydrocarbon solvent used in the above-mentioned liquid-phase polymerization method include an aliphatic hydrocarbon such as propane, butane, pentane, hexane, heptane, octane, decane, dodecane and coal oil; an alicyclic hydrocarbon such as cyclopentane, cyclohexane and methylcyclopentane; aromatic hydrocarbon such as benzene, toluene and xylene; a halogenated hydrocarbon such as ethylene chloride, chlorobenzene and dichloromethane; a mixture thereof and the like, and the olefin itself may be used as a solvent.

In polymerization of the olefin having 2 to 20 carbon atoms with the use of the catalyst for olefin polymerization as described above, the transition metal compound (Q) is used usually in an amount of $10^{-12}$ to 1 mol, preferably $10^{-10}$ to $10^{-2}$ mole per liter of reaction volume.

In the case that the component (R-1) is used, it is desirably used in an amount that the molar ratio [(R-1)/M] of the component (R-1) to a transition metal atom (M) in the transition metal compound (Q) is usually 0.01 to 100,000, and

preferably 0.05 to 50,000. In the case that the component (R-2) is used, it is desirably used in an amount that the molar ratio [(R-2)/M] of an aluminum atom in the component (R-2) to the transition metal atom (M) in the transition metal compound Q is usually 10 to 500,000, and preferably 20 to 100,000. In the case that the component (R-3) is used, it is desirably used in an amount that the molar ratio [(R-3)/M] of the component (R-3) to the transition metal atom (M) in the transition metal compound (Q) is usually 1 to 10, and preferably 1 to 5.

If the polymerization is carried out by coexisting ethylene and at least one of α-olefins, which are selected from an α-olefin having 3 to 20 carbon atoms, and have different polymerization reactivity, in the presence of a catalyst for olefin polymerization which contains the transition metal compound (Q), it is possible to prepare an olefin based block copolymer (B) comprising polymer segments where monomer compositions of two or more kinds change continuously.

Herein, the olefin based block copolymer (B) refers to a copolymer in a form that polymer chains (polymer segment), which have differences in the primary structures of the polymer due to monomer species, comonomer species, comonomer composition, comonomer content, comonomer arrengement and stereoregularity or the like, are linked in two or more kinds in one molecular chain as described above. This copolymer is synthesized by successively adding different monomer species or monomers of different monomer compositions in a living polymerization where no chain transfer reaction substantially takes place.

The olefin based block copolymer (B) used in the invention is specifically prepared by, for example, conducting the process (1) and the process (2), and then repeating the process (3) in any number, if necessary. Thereby, the olefin based block copolymer (B) which comprises the plural polymer segments is prepared.

In the process (1), ethylene alone, or ethylene and at least one selected from an α-olefin having 3 to 20 carbon atoms, are polymerized in the presence of the catalyst for olefin polymerization described above to prepare the polymer segments as described above. The α-olefin having 3 to 20 carbon.atoms may be used alone or in combination of two or more kinds.

In the process (1), the polymerization temperature is usually in the range of -40 to +200°C, preferably 0 to +150°C. The polymerization pressure is usually normal pressure to 100 kg/cm$^2$, preferably normal pressure to 50 kg/cm$^2$.

In the process (2), in the presence of the polymer segment prepared in the process (1), ethylene is polymerized with at least one selected from an α-olefin having 3 to 20 carbon atoms, to prepare the polymer segment as described above, which is different from the polymer segment prepared in the process (1). The α-olefin having 3 to 20 carbon atoms may be used alone or in combination of two or more kinds.

Herein, the different polymer segment refers to those which are different in at least one of the primary structure of the polymer such as monomer species, comonomer species, comonomer composition, comonomer content, comonomer sequence and stereoregularity.

In the process (2), the polymerization temperature is usually in the range of -40 to +200°C, preferably 0 to +150°C. The polymerization pressure is usually normal pressure to 100 kg/cm$^2$, preferably normal pressure to 50 kg/cm$^2$.

In the process (3), ethylene alone, or ethylene is polymerized with at least one α-olefin selected from an α-olefins having 3 to 20 carbon atoms in the presence of the polymer segments obtained in the process (1) and the process (2), to prepare the polymer segment as described above, which is different from the polymer segment prepared in the process (2). The α-olefin having 3 to 20 carbon atoms may be used alone or in combination of two or more kinds.

In the process (3), the polymerization temperature is usually in the range of -40 to +200°C, preferably 0 to +150°C. The polymerization pressure is usually under the conditions of normal pressure to 100 kg/cm$^2$, preferably normal pressure to 50 kg/cm$^2$.

This process (3) may be repeated in any number with changing the kind of the α-olefin, or combination or polymerization conditions.

According to the preparation method as described above, an olefin based block copolymer (B), which has high molecular weight and narrow molecular weight distribution with high polymerization activity, is obtained at high polymerization temperature.

In addition, by bringing this olefin block copolymer into contact with a functional group-containing compound, an olefin based block copolymer (B) may be obtained, which has a functional group on the terminal.

Furthermore, in this preparation method, the olefin is polymerized in the presence of a catalyst which advances a living polymerization of the olefin, and polymerization can be performed with the use of a catalyst obtained by breaking the bond of the catalyst and the produced polymer chain, which is formed in the polymerization, by the chain transfer reaction.

The progress of the living polymerization can be ascertained by narrow molecular weight distribution of the obtained polymer, and increase in the molecular weight of the produced polymer with the polymerization time. According to this, for example, it is possible to prepare the above-mentioned monodisperse polyolefin, olefin copolymer, tapered polymer, or olefin block copolymer.

The progress of the above-mentioned living polymerization is preferably ascertained, for example, by polymerization of the olefin under the condition where a chain transfer agent is excluded. The molecular weight of the obtained polymer can be controlled by controlling a monomer/catalyst ratio, a polymerization time and the like.

According to the preparation method as described above, an olefin based block copolymer (B), which has an exactly controlled structure as well as high molecular weight and a narrow molecular weight distribution with high polymerization activity, is obtained at high polymerization, temperature.
Furthermore, the block copolymer (B) of the invention may be graft modified by at least one compound selected from an unsaturated carboxylic acid and a derivative thereof. The above-mentioned unsaturated carboxylic acid includes, for example, maleic anhydride and the like. The graft modification can be performed with a usual method.

<Inorganic filler (D)>

Specific examples of an inorganic filler (D) include a powdery filler such as natural silicic acid or silicate such as fine powder talc, kaolinite, calcined clay, pyrophyllite, sericite and wollastonite; carbonate such as precipitated calcium carbonate, heavy calcium carbonate and magnesium carbonate; hydroxide such as aluminum hydroxide and magnesium hydroxide; oxide such as zinc oxide, zinc white and magnesium oxide; synthesized silicic acid or silicate such as hydrated calcium silicate, hydrated aluminum silicate, hydrated silicate and anhydrous silicic acid;
a flaky filler such as mica;
a fibrous filler such as basic magnesium sulfate whisker, calcium titanate whisker, aluminum borate whisker, sepiolite, PMF (Processed Mineral Fiber), xonotlite, potassium titanate and ellestadite;
a balloon filler such as glass balloon and fly ash balloon; and the like.
Among them, preferably talc, more preferably fine powder talc having an average particle size of 0.01 to 10 μm is used in the invention. Furthermore, the average particle size of talc can be measured by a liquid phase sedimentation method.
In addition, the inorganic filler used in the invention, particularly talc may be of no treatment or of a surface treatment in advance. This surface treatment includes specifically a chemical or physical treatment with the use of a treatment agent such as a silane coupling agent, higher fatty acid, fatty acid metal salt, unsaturated organic acid, organic titanate, resin acid and polyethylene glycol. If talc which has been subjected to such surface treatment is used, a molded product is obtained, which is excellent in mechanical property and formability.
In the case that the inorganic filler as described above is used in the invention, it may be used alone or in combination of two or more kinds. In addition, an organic filler such as high-styrenes, lignin and recycled rubber may be combined with such inorganic filler.

<Other copolymers>

"Other copolymers" (elastomer, resin for elastomer) may be contained if necessary in the propylene polymer composition according to the invention (wherein the above-mentioned composition means the "first composition" and the "second composition" described below).
The "other copolymers" are not particularly limited, but, include, for example, an ethylene/α-olefin random copolymer (C) and the like. These copolymers may be used alone or in combination of two or more kinds.
The "other copolymers" may be contained in an amount of usually 1 to 80 parts by weight, preferably 10 to 70 parts by weight per 100 parts by weight of the total amount of the propylene based polymer (A) and the olefin based block copolymer (B), or per 100 parts by weight of the total amount of the propylene based polymer (A) and the olefin based block copolymer (BB).
The ethylene/α-olefin random copolymer (C) which may be used in the invention is not particularly limited, but, for example, it is desirably a soft ethylene/α-olefin copolymer having a density of 0.855 g/cm$^3$ or more and less than 0.895 g/cm$^3$, preferably 0.860 to 0.890 g/cm$^3$, and a melt flow rate (MFR; ASTM D 1238, 190°C and a load of 2.16 kg) of, for example, 0.001 to 30 g/10 min, preferably 1 to 20 g/10 min.
The α-olefin which is subjected to copolymerization with ethylene is an α-olefin having 3 to 20 carbon atoms, specifically propylene, 1-butene, 1-pentene, 1-hexene, 1-heptene, 1-octene, 1-nonene, 1-decene, 1-undecene, 1-dodecene, 1-hexadodecene, 1-octadecene, 1-nonadecene, 1-eicocene, 4-methyl-1-pentene and the like. Among them, the α-olefin having 3 to 10 carbon atoms is preferred. These α-olefins may be used alone, or in combination of two or more kinds.
The ethylene/α-olefin random copolymer (C) desirably contains a unit derived from ethylene in an amount of 60 to 90 mol%, and a unit derived from an α-olefin having 3 to 20 carbon atoms in an amount of 10 to 40 mol% (wherein the total amount of the unit derived from ethylene and the unit derived from the α-olefin having 3 to 20 carbon atoms is 100 mol%).
In addition, the ethylene/α-olefin random copolymer (C) may contain a unit derived from other polymerizable monomers, in addition to these units, within the range where the object of the present invention is not damaged.
The above-mentioned other polymerizable monomers include, for example, vinyl compounds such as styrene, vinylcyclopentene, vinylcyclohexane and vinylnorbornane;

vinyl esters such as vinyl acetate;
unsaturated organic acid such as maleic anhydride or a derivative thereof;
conjugated dienes such as butadiene, isoprene, pentadiene and 2,3-dimethylbutadiene;
nonconjugated polyenes such as 1,4-hexadiene, 1,6-octadiene, 2-methyl-1,5-hexadiene, 6-methyl-1,5-heptadiene, 7-methyl-1,6-octadiene, dicyclopentadiene, cyclohexadiene, dicyclooctadiene, methylene norbornene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropyliden-5-norbornene, 2-ethylidene-3-isopropylidene-5-norbornene and 2-propenyl-2,2-norbornadiene: and the like.

The ethylene/α-olefin random copolymer (C) may further contain a unit derived from the other polymerizable monomers in an amount of 10 mol% or less, preferably 5 mol% or less, and more preferably 3 mol% or less, per 100 mol% of the total amount of the unit derived from ethylene and the unit derived from an α-olefin having 3 to 20 carbon atoms.

Specific examples of the ethylene/α-olefin random copolymer (C) include an ethylene/propylene random copolymer, an ethylene/1-butene random copolymer, an ethylene/propylene/1-butene random copolymer, an ethylene/propylene/ethylidenenorbornene random copolymer, an ethylene/propylene/dicyclopentadiene random copolymer, an ethylene/1-hexene random copolymer, an ethylene/1-octene random copolymer and the like. Among them, the ethylene/propylene random copolymer, the ethylene/1-butene random copolymer, the ethylene/1-hexene random copolymer, the ethylene/1-octene random copolymer, the ethylene/propylene/ethylidenenorbornene random copolymer and the ethylene/propylene/dicyclopentadiene random copolymer are particularly preferably used. These copolymers may be used in combination of two or more kinds.

In addition, the ethylene/α-olefin random copolymer (C) used in the invention has the crystallization degree of usually 40% or less, preferably 0 to 39%, and more preferably 0 to 35%, as measured by an X ray diffraction method.

In addition, the ethylene/α-olefin random copolymer (C) may be crosslinked and contained in the propylene based resin composition according to the invention.

The ethylene/α-olefin random copolymer (C) as described above can be prepared by a conventionally known method with the use of a vanadium-based catalyst, a titanium-based catalyst or a metallocene-based catalyst and the like.

<Propylene based resin composition>

The olefin based block copolymer (B) prepared as described above is useful as a modifier, and blending it with the propylene based polymer (A) gives a propylene based resin composition which has desired properties. A propylene based resin composition comprising the propylene based polymer (A) in an amount of 1 to 99% by weight and the olefin based block copolymer (B) in an amount of 99 to 1% by weight (wherein the total amount of the propylene based polymer (A) and the olefin based block copolymer (B) is 100% by weight) is excellent in impact resistance and heat resistance.

In addition, a propylene based resin composition (I) which contains the propylene based polymer (A) in an amount of 40 to 99% by weight, preferably 50 to 90% by weight and the olefin based block copolymer (B) in an amount of 60 to 1% by weight, preferably 50 to 10% by weight (wherein the total of the propylene based polymer (A) and the olefin based block copolymer (B) is 100% by weight), and further substantially contains no inorganic filler (D), is excellent in transparency as well as in impact resistance and heat resistance, and further has hardly appearance change even at high temperature.

In addition, a propylene based resin composition (II) which contains the propylene based polymer (A) in an amount of less than 40% by weight and 1% by weight or more, preferably 30 to 1% by weight and the olefin based block copolymer (B) in an amount of more than 60% by weight and 99% by weight or less, preferably 70 to 99% by weight (wherein the total amount of the propylene based polymer (A) and the olefin based block copolymer (B) is 100% by weight) is excellent in flexibility and rubber elasticity as well as in heat resistance.

Herein, substantially containing no inorganic filler (D) means containing 1 part by weight or less, preferably 0.5 part by weight or less, and more preferably 0.1 part by weight or less of the inorganic filler,(D), or no containing it, per 100 parts by weight of the total amount of the propylene based polymer (A) and the olefin based block copolymer (B).

In addition, the above-mentioned composition (II) may contain an inorganic filler (D) such as talc in order to improve flame retardance, which is contained in an amount of preferably 10 to 800 parts by weight, more preferably 100 to 500 parts by weight, per 100 parts by weight of the composition (II).

It is preferable that the propylene based resin composition has a loss tangent (tan δ) peak caused from the glass transition temperature of the propylene polymer [A] and a loss tangent (tan δ) caused from the glass transition temperature of the ethylene block copolymer [B], when the temperature-dependence of the elasticity is measured at intervals of 2°C and plotted, and that these peaks be separated from each other. It is judged that these peaks be "separated," when the two peaks are distinctly observed, i.e., there is a local minimum point (relative minimum point) between the tops of these peaks. The propylene based resin composition which has two "separated" peaks is excellent both in impact resistance and rigidity.

The propylene based resin composition according to the invention is prepared by kneading the propylene based

polymer (A) and the olefin based block copolymer (B) in a conventionally known method such as mixing by internal mixers such as Banbury mixer, a kneader and intermix.

In addition, an apparatus for continuous kneading/discharge such as an extruder is suitably used in the modification of the resin as described above. Kneading is desirably performed at more than the melting point or softening point of the resin to be discharged, and further 400°C or less.

<Additive>

The propylene based resin composition according to the invention (wherein the above-mentioned composition means the "first composition" and the "second composition" described below) may contain an additive such as a nucleating agent, an antioxidizing agent, a hydrochloric acid absorbent, a heat-resistant stabilizer, a light stabilizer, an ultraviolet absorbent, a lubricant an antistatic agent, a flame retardant , a pigment, a dye, a dispersant, a copper inhibitor, a neutralizer, a foaming agent, a plasticizer, a bubble inhibitor, a crosslinking agent, a crosslinking aid, a silane coupling agent, a peroxide, an agent for improvement of weld strength and the like, in addition to each component as described above within limits not harmful to the object of the invention.

The above-mentioned antioxidizing agent includes, for example, a phenol-based antioxidizing agent, a sulfur-based antioxidizing agent, a phosphorus-based antioxidizing agent and the like.

The above-mentioned phenol-based antioxidizing agent includes, for example, phenols such as 2,6-di-tert-butyl-p-cresol, stearyl(3,3-dimethyl-4-hydroxybenzyl)thioglycolate, stearyl-β-(4-hydroxy-3,5-di-tert-butylphenol)propionate, distearyl-3,5-di-tert-butyl-4-hydroxybenzyl phosphonate, 2,4,6-tris(3',5'-di-tert-butyl-4'-hydroxybenzylthio)-1,3,5-triazine, distearyl(4-hydroxy-3-methyl-5-tert-butylbenzyl)malonate, 2,2'-methylene-bis(4-methyl-6-tert-butylphenol), 4,4'-methylene-bis(2,6-di-tert-butylphenol), 2,2'-methylene-bis[6-(1-methylcyclohexyl)p-cresol], bis[3,5-bis[4-hydroxy-3-tert-butylphenyl)butyric acid]glycolester, 4,4'-butylidenebis(6-tert-butyl-m-cresol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butyl)benzyl isocyanurate, 1,3,5-tris(3,5-di-tert-butyl-4-hydroxybenzyl)-2,4,6-trimethylbenzene, tetrakis[methylene-3-(3,5-di-tert-butyl-4-hydroxyphenyl)propionate]methane, 1,3,5-tris(3,5-di-tert-butyl-4-hydroxybenzyl)isocyanurate, 1,3,5-tris[(3,5-di-tert-butyl-4-hydroxyphenyl)propionyloxyethyl]isocyanurate, 2-octylthio-4,6-di(4-hydroxy-3,5-di-tert-butyl)phenoxy-1,3,5-triaiine and 4,4'-thiobis(6-tert-butyl-m-cresol), polyvalent phenol/carbonate oligoesters such as carbonate oligoester of 4,4'-butylidenebis(2-tert-butyl-5-methylphenol) (having a degree of polymerization of, for example, 2 to 10) and the like.

The above-mentioned sulfur-based antioxidizing agent includes, for example, dialkyl thiodipropionates such as dilauryl, dimyristyl or distearyl thiodipropionates; and esters (e.g., pentaerythritol tetralaurylthiopropionate) of alkyl thiopropionates such as butyl, oxtyl, lauryl or stearyl thiopropionates and polyhydric alcohols (e.g., glycerin, trimethylol ethane, trimethylol propane, pentaerythritol or trishydroxyethylisocyanurate).

The above-mentioned phosphorus-based antioxidizing agent includes, for example, trioctylphosphite, trilaurylophosphite, tridecylphosphite, octyldiphenylphosphite, tris(2,4-di-tert-butylphenyl)phosphite, triphenyl phosphite, tris (butoxyethyl)phosphite, tris(nonylphenyl)phosphite, distearylpentaerythritoldiphosphite, tetra(tridecyl)-1,1,3-tris(2-methyl-5-tert-butyl-4-hydroxyphenyl)butanediphosphite, tetra($C_{12}$ to $C_{15}$ mixed alkyl)-4,4'-isopropylidendiphenyl diphosphite, tetra(tridecyl)-4,4'-butylidenebis(3-methyl-6-tert-butylphenol)diphosphite, tris(3,5-di-tert-butyl-4-hydroxyphenyl) phosphite, tris(mono/di mixed nonylphenyl)phosphite, hydride-4,4'-isopropylidendiphenol polyphosphite, bis(octylphenyl)/bis[4,4'-butylidenebis(3-methyl-6-tert-butylphenol)]/1,6-hexanediol diphosphite, phenyl/4,4'-isopropylidendiphenol/ pentaerythritoldiphosphite, bis(2,4-di-tert-butylphenyl)pentaerythritoldiphosphite, bis(2,6-di-tert-butyl-4-methylphenyl) pentaerythritoldiphosphite, tris[4,4'-isopropylidenebis(2-tert-butylphenol)]phosphite, phenyl/diisodecyl phosphite, di(nonylphenyl)pentaerythritoldiphosphite), tris(1,3-di-stearoyloxyisopropyl)phosphite, 4,4'-isopropylidenebis(2-tert-butylphenol)/di(nonylphenyl)phosphite, 9,10-di-hydro-9-oxa-9-oxa-10-phosphaphenanthrene-10-oxide, tetrakis(2,4-di-tert-butylphenyl)-4,4'-biphenylenediphosphonite and the like.

Furthermore, other antioxidizing agents include a derivative of 6-hydroxychromane, for example, various tocopherols of α, β, y and δ and a mixture thereof, 2,5-dimethyl substitution product, 2,5,8-trimethyl substitution product and 2,5,7,8-tetramethyl substitution product of 2-(4-methyl-penta-3-enyl)-6-hydroxychromane, 2,2,7-trimethyl-5-tert-butyl-6-hydroxychromane, 2,2,5-trimethyl-7-tert-butyl-6-hydroxychromane, 2,2,5-trimethyl-6-tert-butyl-6-hydroxychromane, 2,2-dimethyl-5-tert-butyl-6-hydroxychromane and the like.

In addition, a complex compound represented by the following formula:

$$M_xAl_y\,(OH)_{2x+3y-2z}\,(A)_z\cdot aH_2O$$

(wherein M is Mg, Ca or Zn; A is an anion other then a hydroxyl group; "x", "y" and "z" are each a positive number; and "a" is 0 or a positive number), for example, $Mg_6Al'_2\ (OH)_{16}CO_3\cdot 4H_2O$, - $Mg_6Al_2\ (OH)_{20}CO_3\cdot 5H_2O$, $Mg_5Al_2\ (OH)_{14}CO_3\cdot 4H_2O$, $Mg_{10}Al_2\ (OH)_{22}\ (CO_3)_2\cdot 4H_2O$, $Mg_6Al_2(OH)_{16}HPO_4\cdot 4H_2O$, $Ca6Al_2\ (OH)_{16}CO_3\cdot 4H_2O$, $Zn_6Al_2$

(OH) $_{16}CO_3{\cdot}_4H_2O$, $Zn_6Al_2(OH)_{16}SO_4{\cdot}4H_2O$, $Mg_6Al_2(OH)$ $_{16}SO_3{\cdot}4H_2O$, $Mg_6Al_2$ $(OH)_{12}CO_3{\cdot}3H_2O$ and the like may be used as a hydrochloric acid absorbent.

The above-mentioned light stabilizer includes, for example, hydroxybenzophenones such as 2-hydroxy-4-methoxybenzophenone, 2-hydroxy-4-n-octoxybenzophenone-2,2'-di-hydroxy-4-methoxybenzophenone and 2,4-dihydroxybenzophenone, benzotriazoles such as 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-5'-methylphenyl)benzotriazole and 2-(2'-hydroxy-3',5'-di-tert-amylphenyl)benzotriazole, benzoates such as phenyl salicylate, p-tert-butylphenyl salicylate, 2,4-di-tert-butylphenyl-3,5-di-tert-butyl-4-hydroxybenzoate and hexadecyl-3,5-di-tert-butyl-4-hydroxybenzoate, nickel compounds such as 2,2'-thiobis(4-tert-octylphenol)Ni salt, [2,2'-thiobis(4-tert-octylphenolate)]-n-butylamine Ni and (3,5-di-tert-butyl-4-hydroxybenzyl)phosphonic acid monoethylester Ni salt, substituted acrylonitriles such as methyl α-cyano-β-methyl-β-(p-methoxyphenyl) acrylate, oxalic acid dianilides such as N'-2-ethylphenyl-N-ethoxy-5-tert-butylphenyl oxalic acid diamide and N-2-ethylphenyl-N'-2-ethoxyphenyl oxalic acid diamide, a hindered amine compound such as a condensate of bis(2,2;6,6-tetramethyl-4-piperidine)cebaciate, poly[{(6-(1,1,3,3-tetramethylbutyl)imino}-1,3,5-triazine-2,4-diyl(4-(2,2,6,6-tetramethylpiperidyl) imino}hexamethylene] or 2-(4-hydroxy-2,2,6, 6-tetramethyl-1-piperidyl)ethanol with dimethyl succinate and the like.

Examples of the lubricants include aliphatic hydrocarbons such as paraffin wax, polyethylene wax and polypropylene wax; higher fatty acids such as capric acid, lauric acid, myristic acid, palmitic acid, margaric acid, stearic acid, arachidic acid and behenic acid; metal salts of the higher fatty acids such as lithium, calcium, sodium, magnesium and potassium salts; aliphatic alcohols such as palmityl alcohol, cetyl alcohol and stearyl alcohol; aliphatic amides such as caproic amide, caprylic amide, capric amide, lauric amide, myristic amide, palmitic amide and stearic amide; esters formed between fatty acids and alcohols; and fluorine compounds such as fluoroalkylcarboxylic acids and metal salts thereof, and metal salts of fluoroalkylsulfonic acids.

The above additive is used in an amount of preferably 0.0001 to 10 parts by weight, per 100 parts by weight of the total amount of the propylene based polymer (A) and the olefin based block copolymer (B), or per 100 parts by weight of the total amount of the propylene based polymer (A) and the olefin based block copolymer (BB) described below. The above-mentioned propylene based resin composition can contain the above-mentioned additive to form a molded product having further improved physical property balance, durability, coating property, print property, scratch resistance and formability.

In addition, the propylene based resin composition according to the invention may contain a nucleating agent. Various nucleating agents known in the past are used without any particular limitation. In particular, the nucleating agent such as aromatic phosphoric ester salt represented by the following formulae (4) and (5), and dibenzylidene sorbitol represented by the following formula (6) is suitably used.

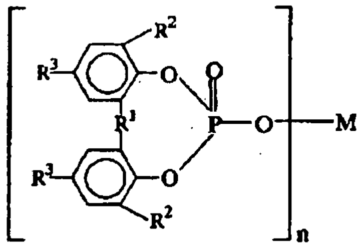

··· (4)

wherein $R^1$ is oxygen, sulfur or a hydrocarbon group having 1 to 10 carbon atoms; $R^2$ and $R^3$ are each independently hydrogen, or a hydrocarbon group having 1 to 10 carbon atoms, may be identical or different from each other and $R^2$'s, $R^{34}$s, or $R^2$ and $R^3$ may be bonded to each other to form a ring structure; M is a metal atom having 1 to 3 valences; and n is an integer of 1 to 3.

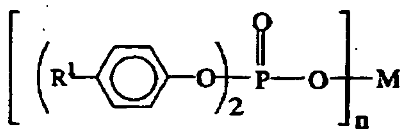

··· (5)

wherein $R^1$ is hydrogen or a hydrocarbon group having 1 to 10 carbon atoms; M is a metal atom having 1 to 3 valences; and n is an integer of 1 to 3.

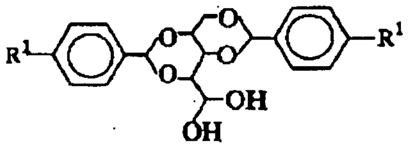

... (6)

wherein $R^1$ is hydrogen or a hydrocarbon group having 1 to 10 carbon atoms.

Specific examples of the nucleating agent represented by the aforementioned formula (4) include sodium-2,2'-methylene-bis(4,6-di-t-butylphenyl)phosphate, sodium-2,2'-ethylidene-bis(4,6-di-t-butylphenyl)phosphate, lithium-2,2'-methylene-bis(4,6-di-t-butylphenyl)phosphate, lithium-2,2'-ethylidene-bis(4,6-di-t-butylphenyl)phosphate, sodium-2,2'-ethylidene-bis(4-i-propyl-6-t-butylphenyl)phosphate, lithium-2,2'-methylene-bis(4-methyl-6-t-butylphenyl)phosphate, lithium-2,2'-methylene-bis(4-ethyl-6-t-butylphenyl).phosphate, calcium-bis[2,2'-thiobis(4-methyl-6-t-butylphenyl)phosphate], calcium-bis[2,2'-thiobis(4-ethyl-6-t-butylphenyl)phosphate], calcium-bis[2,2'-thiobis-(4,6-dit-butylphenyl)phosphate], magnesium-bis-[2,2'-thiobis(4,6-di-t-butylphenyl)phosphate], magnesium-bis[2,2'-thiobis-(4-t-octylphenyl)phosphate], sodium-2, 2'-butylidene-bis (4,6-di-methylphenyl) phosphate, sodium-2,2'-butylidene-bis(4,6-di-t-butylphenyl) phosphate, sodium-2,2'-t-octylmethylene-bis(4,6-di-methylphenyl)phosphate, sodium-2,2'-t-octylmethylene-bis(4,6-di-t-butylphenyl)phosphate, calcium-bis-(2,2'-methylene-bis(4,6-di-t-butylphenyl)phosphate), magnesium-bis[2,2'-methylene-bis(4,6-di-t-butylphenyl)phosphate], barium-bis[2,2'-methylene-bis(4,6-di-t-butylphenyl)phosphate], sodium-2,2'-methylene-bis(4-methyl-6-t-butylphenyl)phosphate, sodium-2,2'-methylene-bis(4-ethyl-6-t-butylphenyl)phosphate, sodium(4,4'-dimethyl-5,6'-di-t-butyl-2,2'-biphenyl)phosphate, calcium-bis[(4,4'-dimethyl-6,6'-di-t-butyl-2,2'-biphenyl)phosphate], sodium-2,2'-ethylidene-bis(4-m-butyl-6-t-butylphenyl)phosphate, sodium-2,2'-methylene-bis(4,6-di-methylphenyl)phosphate, sodium-2,2'-methylene-bis(4,6-di-ethylphenyl)phosphate, potassium-2,2'-ethylidene-bis(4,6-di-t-butylphenyl)phosphate, calcium-bis[2,2'-ethylidene-bis(4,6-di-t-butylphenyl)phosphate], magnesium-bis[2,2'-ethylidene-bis (4,6-di-t-butylphenyl)phosphate], barium-bis[2,2'-ethylidene-bis(4,6-di-t-butylphenyl)phosphate], aluminum-tris[2,2'-methylene-bis(4,6-di-t-butylphenyl)phosphate, and aluminum-tris[2,2'-ethylidene-bis(4,6-di-t-butylphenyl)phosphate. The nucleating agents can be used alone or in combination of two or more kinds. In particular, sodium-2,2'-methylene-bis(4,6-di-t-butylphenyl)phosphate is preferable.

Specific examples of the nucleating agent represented by the aforementioned formula (5) include sodium-bis (4-t-butylphenyl)phosphate, sodium-bis(4-methylphenyl) phosphate, sodium-bis(4-ethylphenyl)phosphate, sodium-bis (4-i-propylphenyl)phosphate, sodium-bis(4-t-octylphenyl)phosphate, potassium-bis(4-t-butylphenyl)phosphate, calcium-bis(4-t-butylphenyl)phosphate, magnesium-bis(4-t-butylphenyl)phosphate, lithium-bis(4-t-butylphenyl)phosphate, and aluminum-bis(4-t-butylphenyl)phosphate. The nucleating agents can be used alone or in combination of two or more kinds. In particular, sodium-bis(4-t-butylphenyl)phosphate is preferable.

Specific examples of the nucleating agent represented by the aforementioned formula (6) include 1,3,2,4-dibenzylidene sorbitol, 1,3-benzylidene-2,4-p-methylbenzylidene sorbitol, 1,3-benzylidene-2,4,-p-ethylbenzylidene sorbitol, 1,3-p-methylbenzylidene-2,4-benzylidene sorbitol, 1,3-p-ethylbenzylidene-2,4-benzylidene sorbitol, 1,3-p-methylbenzylidene-2,4-p-ethylbenzylidene sorbitol, 1,3-p-ethylbenzylidene-2,4-.p-methylbenzylidene sorbitol, 1,3,2,4-di(p-methylbenzylidene)sorbitol, 1,3,2,4-di(p-ethylbenzylidene)sorbitol, 1,3,2,4-di(p-'n-propylbenzylidene)sorbitol, 1,3,2,4-di(p-i-propylbenzylidene)sorbitol, 1,3,2,4-di(p-n-butylbenzylidene)sorbitol, 1,3,2,4-di(p-s-butylbenzylidene)sorbitol, 1,3,2,4-di(p-t-butylbenzylidene)sorbitol, 1,3,2,4-di(2',4'-dimethylbenzylidene)sorbitol, 1,3,2,4-di(p-methoxybenzylidene)sorbitol, 1,3,2,4-di(p-ethoxybenzylidene)sorbitol, 1,3-benzylidene-2,4-p-chlorobenzylidene sorbitol, 1,3-p-chlrorobenzylidene-2,4-benzylidene sorbitol, 1,3-p-chlorobenzylidene-2,4-p-methylbenzylidene sorbitol, 1,3-p-chlorobenzylidene-2,4-p-ethylbenzylidene sorbitol, 1,3-p-methylbenzylidene-2,4-p-chlorobenzylidene sorbitol, 1,3-p-ethylbenzylidene-2,4-p-chlorbbenzylidene sorbitol, 1, 3, 2, 4-di- (p-chlorobenzylidene)sorbitol and a combination thereof. In particular, 1,3,2,4-dibenzylidene sorbitol, 1,3,2,4-di(p-methylbenzylidene)sorbitol, 1,3,2,4-di(p-ethylbenzylidene)sorbitol, 1,3-p-chlorobenzylidene-2,4-p-methylbenzylidene sorbitol, and 1, 3, 2, 4-di (p-chlorobenzylidene)sorbitol are preferable. The nucleating agents can be used alone or in combination of two or more kinds.

Further, examples of the nucleating agent used include a metal salt of an aromatic carboxylic acid and an aliphatic carboxylic acid, and specifically aluminum benzoate, aluminum p-t-butylbenzoate, sodium adipate, sodium thiophenecarboxylate, and sodium pyrrolecarboxylate. Furhtermore, an inorganic compound such as talc may be used as the nucleating agent.

The nucleating agent is preferably contained in the composisition in an amount of preferably 0.001 to 10 parts by weight, more preferably 0.01 to 5 parts by weight, and even more preferably 0.1 to 3 parts by weight, per 100 parts by weight of the total amount of the propylene based polymer (A) and the olefin based block copolymer (B), or per 100 parts by weight of the total amount of the propylene based polymer (A) and the olefin based block copolymer (BB) described below. When the nucleating agent is contained in the composition, the crystallization rate of the propylene

based resin composition is improved, crystal particles can be made finer during crystallization and the molding process can be carried out at higher rate.

<Molded article comprising propylene based resin composition>

The propylene based resin composition according to the invention is widely used in polyolefin applications conventionally known, but is suitably used in a molded product of various shapes, e.g., sheet, unstretched film or stretched film. Further, the molded product comprising the propylene based resin composition may be formed from partially the resin composition or completely the resin composition. The former includes, for example, multilayer films comprising at least one layer comprising the propylene copolymer composition, and more specifically multilayer films, multilayer sheets, multilayer containers, multilayer tubes, multilayer coating laminates contained as one component of water-based coatings.

The propylene based resin composition according to the invention is used as various molded products such as films, sheets and pipes by a known thermoforming method such as extrusion molding, inflation molding and calendar molding. In particular, the molded products obtained by extrusion molding and inflation molding are suitably used. Therefore, the molded product having strain recovery properties is obtained.

When the molded product according to the invention is an extrusion-molded product, it is not particularly limited in shape and product type, but examples thereof include sheet, unstretched or stretched film, pipe, hose, wire coating, tube and catheter. In particular, sheet (skin material), unstretched or stretched film, tube, and catheter are preferable.

When the propylene based resin composition is extrusion-molded, a conventionally known extruder and conventionally known molding conditions can be used. For example, the molten composition can be extruded by a single-screw, kneading, ram or gear extruder through a specific die or the like into a desired shape.

The stretched film may be obtained by stretching the above extruded sheet or extruded film (unstretched) by a known stretching process, e.g., tenter (longitudinal/transverse or transverse/longitudinal stretching), simultaneous biaxial stretching or monoaxial stretching to obtain a stretched film.

The sheet or film (unstretched) is stretched at a stretching ratio usually in the range of about ,20 to 70 folds in the case of biaxial stretching, and about 2 to 10 folds in the case of monoaxial stretching. The thickness of the stretched film obtained by stretching is preferably about 5 to 200 $\mu$m.

Further, an inflation film may also be produced as a film-shaped molded product. Less draw down occurs in inflation moildings.

The film or sheet made of the propylene based resin composition is hardly charged and has excellent rigidity such as modulus in tension, heat resistance, stretch property, impact resistance, aging resistance, transparency, gloss, rigidity, moisture-proofness and gas barrier property. Thus, it is widely used for a packing film, a sealing sheet or the like. In this case, the above film and the sheet may be a multilayer laminate comprising at least one layer comprising a propylene based polymer composition.

The molded product according to the invention is suitably used for food packaging and medical care. Specifically, the molded product for food packaging includes food containers such as retortable pouch and bottle containers. The molded product for medical care includes medical containers and infusion bags. Further, there may be exemplified by containers or packaging materials other than the aforementioned containers or packaging materials. When the molded product according to the invention is used for the molded product for food packaging, the molded product for medical care or the other containers, the molded product formed of the aforementioned propylene based resin composition (I) is preferably used. In particular, such composition is preferable in that it is excellent in impact resistance, heat resistance and transparency and its appearance is hardly changed even at high temperature.

Further, when the molded product according to the invention comprises the propylene polymer composition (II), the molded product has excellent rubber elasticity and heat resistance.

Furthermore, another resin composition according to the invention is a propylene based resin composition which comprises:

[A] 1 to 99% by weight of a propylene based polymer (A) (i) having a melt flow rate (MFR: 230°C and a load of 2.16 kg) of 0.1 to 400 g/10 min, (ii) containing 0.01 to 30% by weight of component soluble in n-decane at normal temperature having an intrinsic viscosity [$\eta$], as measured in decalin at 135°C, of 0.2 to 10 dl/g, and (iii) having pentad isotacticity ($I_5$), as determined by $^{13}$C-NMR spectra analysis of the component insoluble in n-decane at normal temperature, of 0.95 or more; and

[BB] 99 to 1% by weight of an olefin based block copolymer (BB) comprising polymer segments (B1), (B1') and (B2) in which the polymer segments (B1) and (B1') are each independently a polymer at least one monomer selected from the group consisting of ethylene and $\alpha$-olefin having 3 to 20 carbon atoms and are each independently a polymer segment of an ethylene based polymer having (i) the ethylene content of 95 to 100 mol% and (ii) a weight average molecular weight (Mw), as measured by high temperature GPC, of 2,000 to 100,000; and in which the

polymer segment (B2) is a copolymer of ethylene and at least one selected from an α-olefin having 3 to 20 carbon atoms and is a polymer segment of an ethylene/α-olefin copolymer having (iii) the ethylene content of 50 to 80 mol% and (iv) a weight average molecular weight (Mw), as measured by high temperature GPC, of 10,000 to 300,000,

which olefin block copolymer has (v) a peak assigned to ββ methylene in its $^{13}C$-NMR spectrum, (vi) a glass transition temperature (Tg), as measured by differential scanning calorimeter (DSC), of -.50°C or less, (vii) an endothermic peak assigned to a melting point (Tm) of 105°C or more as measured by DSC, (viii) a endothermic enthalpy, as determined from a melting peak area, as measured by DSC, in the range of 20 to 60 J/g, (ix) a density of 0.870 to 0.910 g/cm$^3$, (x) a melt flow rate (MFR: 190°C and a load of 2.16 kg) in the range of 0.3 to 50 g/10 min, and (xi) a ratio ((G'$_{50}$°C) / (G'$_{100}$°C) ) of a storage elastic modulus at room temperature (G'$_{50}$°C) to a storage elastic modulus at 100°C (G'$_{100}$°C), as determined by solid viscoelasticity measurements, of 1.0 to 2.0 (wherein the total amount of the propylene based polymer (A) and the olefin based block copolymer (BB) is 100% by weight). Further, the resin composition is sometimes referred to as the "second composition".

The propylene based polymer (A) includes the same propylene polymer as exemplified in the aforementioned first composition. Further, the olefin based block copolymer (BB) is the olefin block copolymer comprising the polymer segments (B1) , (by and (B2). Structure of the olefin based block copolymer (BB) include (B1)-(B2), (B1)-(B2)-(B1') and (B1)-(B2)-(B1')-(B2)-(B1). Herein, (B1) and (B1') may be identical or different from each other. The olefin based block copolymer (BB) may be an olefin block copolymer comprising the polymer segments (B1), (B1') and (B2), i.e., a copolymer comprising polymer segments other than the polymer segments (B1), (B1') and (B2). In particular, the olefin based block copolymer (BB) is an olefin block copolymer comprising the polymer segments (B1), (B1') and (B2), preferably the aforementioned olefin based block copolymer (B) comprising a triblock structure of (B1)-(B2)-(B1'), and more preferable a triblock structure of (B1)-(B2)-(B1').

Such second composition preferably comprises 40 to 99% by weight of the propylene based polymer (A) and 60 to 1% by weight of the olefin based block copolymer (BB) (wherein the total amount of the propylene based polymer (A) and the olefin based block copolymer (BB) is 100% by weight), and does not substantially contain an inorganic filler (D).

Furthermore, the second composition preferably comprises 1% by weight or more and less than 40% by weight of the propylene based polymer (A) and more than 60% by weight and 99% by weight or less of the block copolymer (BB) (wherein the total amount of the propylene based polymer (A) and the olefin based block copolymer (BB) is 100% by weight).

In such second composition, the compounding proportion of the propylene based polymer.(A) and the olefin based block copolymer (BB), preferable properties, the kinds, the amounts and the like of additives which may be added, of the propylene based polymer (A) and the olefin based block copolymer (BB) can be exemplified by the same those as the first composition.

The second molded product of the invention comprises the above-mentioned second composition. The applications or the like of the second molded product of the invention include the same as those described in the above-mentioned first composition.

Hereinafter, the present invention will be further specifically explained with reference to Examples, while the invention shall not be limited to these Examples.

## Examples

Physical properties of each resin component were evaluated as follows.

### 1. Physical properties of olefin based block copolymer (B)

<Density>

A strand obtained after measurement of the melt flow rate at 190°C under a load of 2.16 kg was subjected to heat treatment at 120°C for 1 hour, and was slowly cooled to room temperature over 1 hour, and subsequently the density was measured using a density-gradient tube method.

<α-olefin content, ββ methylene>

The α-olefin content and ββ methylene were determined by $^{13}C$-NMR spectrum.

<Measurement of Molecular Weight>.

The molecular weight was determined at 140°C in an o-dichlorobenzene solvent by GPC (gel permeation

chromatography). The obtained value was calculated in terms of standard polystyrene.

<MFR>

MER was determined in accordance with ASTM D-1238 at 190°C under a load of 2.16 kg.

<Tm and Glass Transition Temperature>

The glass transition temperature was determined from the endothermic curve. The measurement was conducted by heating the sample from room temperature at 30°C/min to 200°C, at which it was held for 5 minutes, then cooling it at 10°C/min to -100°C, and heating it again at 10°C/min, there determining the endothermic curve.

<Crystallinity>

The crystallinity was determined by dividing the endothermic enthalpy per unit mass, found from the DSC-determined endothermic peak, by 70 cal/g as the endothermic enthalpy of the polyethylene, crystal.

<Solid Viscoelasticity>

Temperature-dependence of dynamic viscoelasticity was measured using RDS II manufactured by Rheometric Scientific, Inc.,at a frequency of 62.5 rad/sec in the temperature range from -80 to 150°C, and storage elastic modulus at 50°C ($G'_{50}$°C) and storage elastic modulus at 100°C ($G'_{100}$°C) were determined to calculate a ratio ($G'_{50}$°C) / ($G'_{100}$°C) of storage elastic modulus.

2. Physical properties of propylene based polymer

(A) and ethylene copolymer (C)

<Density>

A strand obtained after measurement of the melt flow rate at 190°C under a load of 2.16 kg was subjected to heat treatment at 120°C for 1 hour, and was slowly cooled to room temperature over 1 hour, and subsequently the density was measured using a density-gradient tube method.

<α-olefin content>

The α-olefin content was determined by $^{13}C$-NMR spectrum.

<Melt Tension (MT)>

The melt tension was determined by measuring a stress given when a molten polymer was stretched at a constant rate. Pellets of the polymer were used as a measuring sample, and the measurement was carried out using a MT measuring apparatus (manufactured by Toyo Seiki Seisaku-Sho, Ltd.) under the conditions of a resin temperature of 190°C, an extrusion speed of 15 mm/min, a winding speed of 10 to 20 m/min, a nozzle diameter of 2.09 mmϕ and a nozzle length of 8 mm.

<MER>

MER was determined in accordance with ASTM D-1238 at a given temperature under a load of 2.16 kg.

<Tm>

Tm was regarded as the temperature at the peak positions of the maximum peak in the endothermic curve determined by a DSC. Measurement was conducted by heating the sample put in an aluminum pan at 10°C/min to 200°C, at which it was held for 5 minutes, then cooling it at 20°C/min to room temperature, and heating it again at 10°C/min, thereby determining the endothermic curve.

3. Physical properties of propylene based resin composition

< Modulus in Tension (YM)>

The modulus in tension was determined in accordance with JIS K6301 using a JIS No. 3 dumbbell under the conditions of a span of 30 mm, a tensile speed: 30 mm/min and temperature of 23°C

<Izod Impact Strength (IZ)>

The Izod impact strength was determined in accordance with ASTM D256 under the condition of 0°C by using the test specimen having a thickness of 6 mm (notched later).

<Transparency (Haze)>

The transparency was measured using a digital haze meter (Model NDH-20D manufactured by NIPPON DENSYOKU INDUSTRY Co., Ltd.) with the test specimen having a thickness of 1 mm.

<Whitening Resistance>

The whitening resistance was measured using a digital turbidimeter (Model NDH-20D manufactured by NIPPON DENSYOKU INDUSTRY Co., Ltd.) with respect to haze values after heating the test specimen having a thickness of 1 mmt at 121°C for 20 minutes.

<Elongation Set>

A load was applied to a 1 mmt thick dumbbell piece having a shape .with a length of 50 mm, a length between marked lines (L0) of 30 mm and a width of 5 mm at a distance between chucks of 30 mm and a tensile speed of 30 mm/min to give 100% set (distance between chucks of 60 mm) and hold for 10 minutes. Then, a length (L; mm) between marked lines at 10 minutes after removing the load was measured. Elongation set was obtained as follows:

$$\text{Elongation Set (\%)} = [(L - L0)/L0] \times 100$$

[Heat Resistance (TMA)]

TMA curve was measured in accordance with JIS K7196 using a test specimen having a thickness of 1 mm with a needle of 1.8 mmϕ under the conditions of a pressure of 2 kg/cm$^2$ and an increasing temperature rate of 5°C/min, and needle penetration temperature was determined from the TMA curve.

[Preparation Example 1]

Olefin based block copolymer (B)

To a 1000 mL capacity glass autoclave thoroughly purged with nitrogen, 800 mL of toluene was introduced, and the liquid phase and the gas phase were saturated with a mixing gas of ethylene/nitrogen (ethylene: 30 L/h, nitrogen: 70 L/h). Thereafter, ethylene and nitrogen feeds were stopped and 15 mmol (in terms of aluminum atom) of methylaluminoxane was added while feeding nitrogen to the gas phase, and successively 0.15 mmol of the titanium compound (1) was added to initiate polymerization. The reaction was conducted at 25°C for 5 minutes, and then a mixing gas of ethylene/butene (ethylene: 5 L/h, butene: 95 L/h) was circulated to the liquid phase for 50 minutes while keeping the temperature at 25°C. Ethylene and propylene in the liquid phase was purged with nitrogen by feeding the nitrogen gas (100 L/h) to the liquid phase for 30 minutes and further feeding the ethylene gas (100 L/h) to the liquid phase for 2.5 minutes, and then 25 ml of methanol was added to terminate the polymerization. After the polymerization was completed, to the reaction product was added 5.0 ml of concentrated hydrochloric acid and a large amount of methanol to precipitate a polymer in the whole amount. Then, filtration was effected. The resulting polymer was dried under reduced pressure at 80.°C for 10 hours to obtain 11.2 g of a block copolymer (b-2) (PE-EBR-PE). The weight average molecular weight (Mw) of the obtained polymer was 185,200 (in terms of PS), Mw/Mn thereof was 1.25, and the ethylene content in the polymer was 72 mol%.

Then, the weight average molecular weight of the PE segment was calculated as follows. To a 1000 mL capacity glass autoclave thoroughly purged with nitrogen, 800 mL of toluene was introduced, and the liquid phase and the gas phase were saturated with a mixing gas of ethylene/nitrogen (ethylene: 30 L/h, nitrogen: 70 L/h). Thereafter, ethylene and nitrogen feeds were stopped and 15 mmol (in terms of aluminum atom) of methylaluminoxane was added while feeding nitrogen to the gas phase, and successively 0.1,5 mmol of the titanium compound (1) was added to initiate polymerization. The reaction was conducted at 25°C for 5 minutes, and then 25 ml of methanol was added to terminate the polymerization. After the polymerization was completed, to the reaction product was added 5.0 ml of concentrated hydrochloric acid and a large amount of methanol to precipitate a polymer in the whole amount. Then, filtration was effected. The resulting polymer was dried under reduced pressure at 80°C for 10 hours to obtain PE. Mw of the obtained PE was 20,000.

Therefore, in the olefin block copolymer (b-2), Mw of each PE segment was 20,000, Mw of the EBR segment was 145,200 and the butene content was 36 mol%.

<Olefin block copolymer (b-4)>

To a 1000 mL capacity glass autoclave thoroughly purged with nitrogen, 800 mL of toluene was introduced, and the liquid phase and the gas phase were saturated with a mixing gas of ethylene/nitrogen (ethylene: 50 L/h, nitrogen: 50 L/h). Thereafter, ethylene and nitrogen feeds were stopped and 15 mmol (in terms of aluminum atom) of methylaluminoxane was added while feeding nitrogen to the gas phase, and successively 0.15 mmol of the titanium compound (1) was added to initiate polymerization. The reaction was conducted at 25°C for 5 minutes and 40 mL of hexene was added thereto, and then ethylene (3 L/h) was circulated to the liquid phase for 90 minutes while keeping the temperature at 25°C. Monomer in the liquid phase was purged with nitrogen by feeding the nitrogen gas (100 L/h) to the liquid phase for 30 minutes and further feeding the ethylene gas (100 L/h) to the liquid phase for 3.0 minutes, and then 25 ml of methanol was added to terminate the polymerization. After the polymerization was completed, to the reaction product was added 5.0 ml of concentrated hydrochloric acid and a large amount of methanol to precipitate a polymer in the whole amount. Then, filtration was effected. The resulting polymer was dried under reduced, pressure at 80°C for 10 hours to obtain 11.5 g of a block copolymer (b-4) (PE-EHR-PE). The weight average molecular weight (Mw) of the obtained polymer was 196,000 (in terms of PS), Mw/Mn thereof was 1.30, and the ethylene content in the polymer was 79 mol%.

Then, the weight average molecular weight of the PE segment was calculated as follows. To a 1000 mL capacity glass autoclave thoroughly purged with-nitrogen, 800 mL of toluene was introduced, and the liquid phase and the gas phase were saturated with a mixing gas of ethylene/nitrogen (ethylene: 50 L/h, nitrogen: 50 L/h). Thereafter, ethylene and nitrogen feeds were stopped and 15 mmol (in terms of aluminum atom) of methylaluminoxane was added while feeding nitrogen to the gas phase, and successively 0.15. mmol of the titanium compound (1) was added to initiate polymerization. The reaction was conducted at 25°C for 5 minutes, and then 25 ml of methanol was added to terminate the polymerization. After the polymerization was completed, to the reaction product was added 5.0 ml of concentrated hydrochloric acid and a large amount of methanol to precipitate a polymer in the whole amount. Then, filtration was effected. The resulting polymer was dried under reduced pressure at 80°C, for 10 hours to obtain PE. Mw of the obtained PE was 28,000.

Therefore, in the block copolymer (b-4), Mw of each PE segments was 28,000, Mw of the EHR segment was 140,000 and the 1-hexene content was 30 mol%.

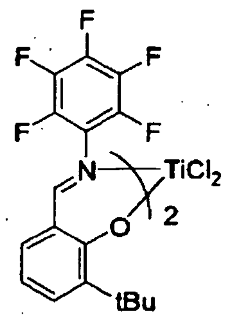

(1)

Properties of the olefin block copolymers (b-2) and (b-4) obtained are shown in Table 1.

[Table 1]

| | b-2 | b-4 |
|---|---|---|
| Structure [B1-B2-B1'] | PE-EBR-PE | PE-HER-PE |
| [B1 and B1'segments] | | |
| Mw | Each 20,000 | Each 28,000 |
| α-olefin content (mol%) | 0 | 0 |
| B2 segment | | |
| α-olefin | 1-butene | 1-hexene |
| Content (mol%) | 36 | 30 |
| | | |
| [B1-B2-B1' as a whole] | | |
| ββ methylene peak | Present | Present |
| Density (g/cm$^3$) | 0.874 | 0.875 |
| Mw | 185,200 | 196,000 |
| Mw/Mn | 1:25 | 1.3 |
| Tg(°C) | -68.2 | -63 |
| Tm(°C) | 116.4 | 121 |
| Endothermic enthalpy (mJ/mg) | 28.9 | 39.7 |
| ($G'_{50}$°C)/($G'_{100°C}$) | 1.4 | 1.9 |
| MFR (g/10 min) | 1.6 | 1.1 |

[Preparation Example 2]

Ethylene copolymer (C).

845 ml of hexane kept at 23°C was introduced to a 2-liter capacity SUS autoclave equipped with a stirrer, which was thoroughly purged with nitrogen. 30 ml of 1-butene was added with rotating the agitator, while it was cooled with ice water, to the autoclave. Then, the inside of the autoclave was heated to 60°C, and pressurized with ethylene to 8 kg/cm$^2$ (0.8 MPa) as the total pressure. When the inside pressure reached 8 kg, 1.0 ml of a 1.0 mM/ml decane solution of triisobutylaluminum (TIBA) was carried by nitrogen into the autoclave under pressure, and then 0.3 ml of a toluene solution prepared beforehand to contain 0.3 mM (in terms of A1) of methylaluminoxane and 0.001 mM of rac-dimethylsilylene-bis[1-(2-methyl-4-phenyl-indenyl) zirconium dichloride was carried by nitrogen into the autoclave under pressure, to initiate the polymerization.

Temperature in the autoclave was controlled at 60°C and ethylene was directly fed to keep the pressure in the autoclave at 8 kg/cm$^2$ (0.8 MPa) for 30 minutes. Methanol (5 ml) was pumped into the autoclave 30 minutes after the polymerization was initiated to terminate the polymerization, and the pressure in the autoclave was released to the atmospheric pressure. Then, 2 L of acetone was added to the reaction solution with stirring.

The solvent-containing, rubber ball-shaped polymer thus prepared was dried under the conditions of 130°C and 600 torr for 13 hours to obtain 58 g of an ethylene/1-butene copolymer containing 16 mol% of 1-butene.

Properties of the ethylene/1-butene copolymer (c-1) obtained are shown in Table 2.

[Table 2]

| Copolymer | c-1 |
|---|---|
| Kind of α-olefin | 1-butene |
| α-olefin content (mol%) | 16 |
| Ethylene content (mol%) | 84 |

(continued)

| | |
|---|---|
| Density (g/cm$^3$) | 0.872 |
| [η] | 1.4 |
| Mw/Mn | |
| MFR (g/10 min) | 4.1 |
| $MFR_{10}/MFR_2$ | |
| MT(g) | 0.5 |
| Tg(°C) | -59 |
| Tm(°C) | 56 |
| 400 × d - 250 | 99 |
| $T_{\alpha\beta}/T_{\alpha\alpha}$ | <0.01 |
| B value | 1.03 |

<Propylene based polymer (A)>

The following polymer was used as the propylene based polymer (A).

Propylene polymer (a-1): manufactured by Mitsui Chemicals, Inc.; F327D (MFR = 7 g/10 min, Tm = 139°C, amount of n-decane-soluble component = 4.7% by weight, [η] = 1.4 dl/g, $I_5$ of n-decane-insoluble component = 0.95)

Propylene polymer (a-2): manufactured by Mitsui Chemicals, Inc.; J104N (MFR = 6 g/10 min, Tm = 162°C, amount of n-decane-soluble component - 1.7% by weight, [η] = 1.2 dl/g. $I_5$ of n-decane-insoluble component = 0.95)

[Example 1]

To 30% by weight of the olefin block copolymer (b-2) was added 70% by weight of the propylene polymer (a-1) and the resulting mixture was melt-kneaded at 200°C using a twin-screw extruder to obtain pellets. The pellets obtained was subjected to an injection molding at a cylinder temperature of 200°C and a mold temperature of 40°C using an injection molding machine (Model 55t, manufactured by Toshiba Machine Co., Ltd.). The results of the evaluation of physical properties of the pellets obtained are shown in Table 3.

[Examples 2 to 5 and Comparative Examples 1 to 3]

Pellets were formed in the same manner as in Example 1 except that the kind and proportion of the polymer used were changed as shown in Table 3. The results of the evaluation of physical properties of the pellets obtained are shown in Table 3.

[Table 3]

| | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|
| Propylene polymer | | | | | | | | |
| (a-1) | 70 | 60 | 60 | | | 60 | | |
| (a-2) | | | | 15 | 15 | | 15 | |
| Block elastomer | | | | | | | | |
| (b-2) | 30 | 40 | | 85 | | | | 100 |
| (b-4) | | | 40 | | 85 | | | |
| Ethylene copolymer | | | | | | | | |
| (c-1) | | | | | | 40 | 85 | |

(continued)

| | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|
| Modulus in Tension (YM) (MPa) | 570 | 450 | 420 | 78 | 59 | 340 | | 49 |
| IZ (0°C) (J/m) | 600 | Not broken | Not broken | | | Not broken | | |
| Transparency (Haze) (%) | 52 | 48 | 45 | | | | | |
| Whitening Resistance (%) | 60 | 55 | 51 | | | 85 | | |
| Elongation Set (%) | | | | 8 | 7 | | 25 | 7 |
| Heat Resistance (TMA) | | | | 154 | 154 | | 65 | 128 |

**Claims**

1. A propylene based resin composition which comprises:

[A] 1 to 99% by weight of a propylene based polymer (A) (i) having a melt flow rate (MFR: 230°C and a load of 2.16 kg) of 0.1 to 400 g/10 min, (ii) containing 0.01 to 30% by weight of the component soluble in n-decane at normal temperature having an intrinsic viscosity [$\eta$], as measured in decalin at 135°C, of 0.2 to 10 dl/g, and (iii) having pentad isotacticity ($I_5$), as determined by $^{13}$C-NMR spectra analysis of the component insoluble in n-decane at normal temperature, of 0.95 or more; ,and
[B] 99 to 1% by weight of an olefin based block copolymer (B) comprising polymer segments (B1), (B1') and (B2) in which the polymer segments (B1) and (B1') are each independently a polymer of at least one monomer selected from the group consisting of ethylene and $\alpha$-olefin having 3 to 20 carbon atoms and are each independently a polymer segment of an ethylene based polymer having (i) the ethylene content of 95 to 100 mol% and (ii) a weight average molecular weight (Mw), as measured by high temperature GPC, of 2,000 to 100,000; and in which the polymer segment (B2) is a copolymer of ethylene and at least one selected from an $\alpha$-olefin having 3 to 20 carbon atoms and is a polymer segment of an ethylene/$\alpha$-olefin copolymer having (iii) the ethylene content of 50 to 80 mol% and (iv) a weight average molecular weight (Mw), as measured by high temperature GPC, of 10,000 to 300,000,

which olefin block copolymer is a block copolymer comprising a linear triblock structure of (B1)-(B2)-(B1') and has (v) a peak assigned to $\beta\beta^2$ methylene in its $^{13}$C-NMR spectrum, (vi) a glass transition temperature (Tg), as measured by differential scanning calorimeter (DSC), of -50°C or less, (vii) an endothermic peak assigned to a melting point (Tm) of 105°C or more as measured by DSC, (viii) a endothermic enthalpy, as determined from a melting peak area, as measured by DSC, in the range of 20 to 60 J/g, (ix) a density of 0.870 to 0.910 g/cm$^3$, (x) a melt flow rate (MFR: 190°C and a load of 2.16 kg) in the range of 0.3 to 50 g/10 min, and (xi) a ratio ((G'$_{50}$°C) /(G'$_{100}$°C)) of a storage elastic modulus at room temperature (G'$_{50}$°C) to a storage elastic modulus at 100°C (G'$_{100}$°C), as determined by solid viscoelasticity measurements, of 1.0 to 2.0 (wherein the total amount of the propylene based polymer (A) and the olefin based block copolymer (B) is 100% by weight).

2. The propylene based resin composition according to claim 1, which comprises 40 to 99% by weight of the propylene based polymer (A) and 60 to 1% by weight of the olefin based block copolymers (B) (wherein the total amount of the propylene based polymer-(A) and the olefin based block copolymer (B) is 100% by weight), and does not substantially-include an inorganic filler (D).

3. The propylene based resin composition according to claim 1, which comprises 1% by weight or more and less than 40% by weight of the propylene based polymer (A) and more than 60% by weight and 99%% by weight or less of

the olefin based block copolymer (B) (wherein the total amount of the propylene based polymer (A) and the olefin based block copolymer (B) is 100% by weight).

**4.** The propylene based resin composition according to claim 1, wherein the polymer segments (B1), (B1') and (B2) are obtained by polymerization in the presence of a catalyst for olefin polymerization comprising a transition metal compound represented by the following formula (1):

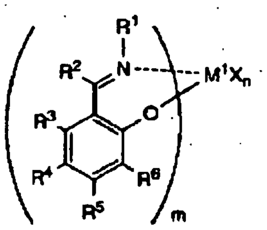

··· (1)

wherein $M^1$ represents a transition metal atom selected from Groups 4 to 5 of the Periodic Table, m represents 1 or 2, $R^1$ represents an aromatic hydrocarbon group, an aliphatic hydrocarbon group or an alicyclic hydrocarbon group wherein in the case that $R^1$ is a phenyl group, it has at least one substituent which is selected from heteroatoms and heteroatom-containing groups in at least one position of Positions 2 and 6, or it has at least one substituent which is selected from a heteroatom excluding a fluorine atom, a fluorine-containing group which contains one carbon atom and two or less fluorine atoms, a fluorine-containing group which contains two or more carbon atoms and a group which contains a heteroatom excluding a fluorine atom, in at least one position of Positions 3 to 5, when the location of the carbon atom which is bonded to the nitrogen is taken as Position 1, and in the case that $R^1$ is an aromatic hydrocarbon group other than a phenyl group, an aliphatic hydrocarbon group or an alicyclic hydrocarbon group, it has at least one substituent which is selected from heteroatoms and heteroatom-containing groups, $R^2$ to $R^5$ represent independently a hydrogen atom, a halogen atom, a halogen-containing group, a hydrocarbon.group, a hydrocarbon-substituted silyl group, an oxygen-containing group, a nitrogen-containing group or a sulfur-containing group, which may be the same or different from each other, $R^6$ represents a halogen atom, a halogen-containing group, a hydrocarbon group or a hydrocarbon-substituted silyl group, n is a number which satisfies the valence of M, X represents an oxygen atom, a hydrogen atom, a halogen atom, a hydrocarbon group, an oxygen-containing group, a sulfur-containing group; a nitrogen-containing group, a boron-containing group, an aluminum-containing group, a
phosphorus-containing group, a halogen-containing group, a heterocyclic compound residue, a silicon-containing group, a germanium-containing group or a tin-containing group, and in the case that n is 2 or more, the plural groups represented by X may be the same or different from each other, and may be bonded to each other to form a ring.

**5.** A molded product which comprises the propylene based resin composition according to any one of claims 1 to 4.

**6.** The molded product according to claim 5,
wherein the molded product is an extrusion molded product or an inflation molded product.

**7.** The molded product according to claim 5 or 6,
wherein the molded product is a film or sheet.

**8.** The molded product according to any one of claims 5 to 7, wherein the molded product is a molded product for medical use.

**9.** The molded product according to any one of claims 5 to 7, wherein the molded products is a molded product for food packaging.

**10.** A propylene based resin composition which comprises:

[A] 1 to 99% by weight of a propylene based polymer (A) (i) having a melt flow rate (MFR: 230°C and a load of 2.16 kg) of 0.1 to 400 g/10 min, (ii) containing 0.01 to 30% by weight of the component soluble in n-decane at normal temperature having an intrinsic viscosity [η], as measured in decalin at 135°C, of 0.2 to 10 dl/g, and (iii) having pentad isotacticity ($I_5$), as determined by $^{13}C$-NMR spectra analysis of the component insoluble in n-decane at normal temperature, of 0.95 or more; and

[BB] 99 to 1% by weight of an olefin based block copolymer (BB) comprising polymer segments (B1), (B1') and (B2) in which the polymer segments (B1) and (B1') are each independently a polymer of at least one monomer selected from the group consisting of ethylene and α-olefin having 3 to 20 carbon, atoms and are each independently a polymer segment of an ethylene based polymer having (i) the ethylene content of 95 to 100 mol% and (ii) a weight average molecular weight (Mw); as measured by high temperature GPC, of 2,000 to 100,000; and in which the polymer segment (B2) is a copolymer of ethylene and at least one selected from an α-olefin having 3 to 20 carbon atoms and is a polymer segment of an ethylene/α-olefin copolymer having (iii) the ethylene content of 50 to 80 mol% and (iv) a weight average-molecular weight (Mw), as measured by high temperature GPC, of 10,000 to 300,000,

which olefin block copolymer has (v) a peak assigned to ββ methylene in its $^{13}$C-NMR spectrum, (vi) a glass transition temperature (Tg), as measured by differential scanning calorimeter (DSC), of -50°C or less, (vii) an endothermic peak assigned to a melting point (Tm) of 105°C or more as measured by DSC, (viii) a endothermic enthalpy, as determined from a melting peak area, as measured by DSC, in the range of 20 to 60 J/g, (ix) a density of 0.870 to 0.910 g/cm$^3$, (x) a melt flow rate (MFR: 190°C and a load of 2.16 kg) in the range of 0.3 to 50 g/10 min, and (xi) a ratio ($G'_{50}$°C)/($G'_{100}$°C) ) of a storage elastic modulus at room temperature ($G'_{50°}$C) to a storage elastic modulus at 1.00°C ($G'_{100}$°C), as determined by solid viscoelasticity measurements, of 1.0 to 2.0 (wherein the total amount of the propylene based polymer (A) and the olefin based block copolymer (BB) is 100% by weight).

**11.** A molded product which comprises the propylene based resin composition according to claim 10.

**Patentansprüche**

**1.** Harzzusammensetzung auf Basis von Propylen, die umfasst:

[A] 1 bis 99 Gew.% eines Polymers auf Propylen-Basis (A) (i) mit einer Schmelzflussrate (MFR: 230°C und eine Last von 2,16 kg) von 0,1 bis 400 g/10 min, (ii) enthaltend 0,01 bis 30 Gew.% der in n-Decan bei normaler Temperatur löslichen Komponente mit einer Grenzviskosität [η], gemessen in Decalin bei 135°C, von 0,2 bis 10 dl/g und (iii) mit einer Pentaden-Isotaktizität ($I_5$), gemessen durch $^{13}$C-NMR-Spektralanalyse der in n-Decan bei normaler Temperatur unlöslichen Komponente von 0,95 oder mehr; und

[B] 99 bis 1 Gew.% eines Block-Copolymers auf Olefin-Basis (B) umfassend Polymersegmente (B1), (B1') und (B2), in dem die Polymersegmente (B1) und (B1') jeweils unabhängig voneinander ein Polymer wenigstens eines Monomers ausgewählt aus der Gruppe bestehend aus Ethylen und α-Olefin mit 3 bis 20 Kohlenstoffatomen sind und jeweils unabhängig voneinander ein Polymersegment eines Polymers auf Ethylen-Basis mit (i) einem Ethylengehalt von 95 bis 100 Mol% und (ii) einem gewichtsmittleren Molekulargeweicht (Mw), gemessen durch Hochtemperatur-GPC, von 2.000 bis 100.000 sind; und in dem das Polymersegment (B2) ein Copolymer von Ethylen und wenigstens einem ausgewählt aus einem α-Olefin mit 3 bis 20 Kohlenstoffatomen ist und ein Polymersegment eines Ethylen/α-Olefin-Copolymers mit (iii) einem Ethylengehalt von 50 bis 80 Mol% und (iv) einem gewichtsmittleren Molekulargewicht (Mw), gemessen durch Hochtemperatur-GPC, von 10.000 bis 300.000 ist,

wobei das Olefin-Block-Copolymer ein Block-Copolymer umfassend eine lineare Triblock-Struktur von (B1)-(B2)-(B1') ist und (v) in seinem $^{13}$C-NMR-Spektrum einen dem ββ-Methylen zugeordneten Peak, (vi) eine Glasübergangstemperatur (Tg), gemessen durch Differential-Raster-Kalorimetrie (DSC), von -50°C oder weniger, (vii) einen durch DSC gemessenen endothermen Peak, der einem Schmelzpunkt (Tm) von 105°C oder mehr zugeordnet wird, (viii) eine endotherme Enthalpie, bestimmt aus der durch DSC gemessenen Schmelzpeakfläche, in einem Bereich von 20 bis 60 J/g, (ix) eine Dichte von 0,870 bis 0,910 g/cm$^3$, (x) eine Schmelzflussrate (MFR: 190°C und eine Last von 2,16 kg) im Bereich von 0,3 bis 50 g/10 min, und (xi) ein Verhältnis (($G'_{50}$°C)/($G'_{100}$°C)) des Speicherelastizitätsmoduls bei Raumtemperatur ($G'_{50}$°C) zum Speicherelastizitätsmodul bei 100°C) ($G'_{100}$°C), bestimmt durch Feststoffviskoelastizitätsmessungen, von 1,0 bis 2,0 aufweist (wobei die Gesamtmenge des Polymers auf Propylen-Basis (A) und des Block-Copolymers auf Olefin-Basis (B) 100 Gew.% beträgt).

**2.** Harzzusammensetzung auf Basis von Propylen gemäß Anspruch 1, die 40 bis 99 Gew.% des Polymers auf Propylen-Basis (A) und 60 bis 1 Gew.% des Block-Copolymers auf Olefin-Basis (B) umfasst (wobei die Gesamtmenge des Polymers auf Propylen-Basis (A) und des Block-Copolymers auf Olefin-Basis (B) 100 Gew.% beträgt) und im wesentlichen keinen anorganischen Füllstoff (B) umfasst.

3. Harzzusammensetzung auf Basis von Propylen gemäß Anspruch 1, die 1 Gew.% oder mehr und weniger als 40 Gew.% des Polymers auf Propylen-Basis (A) und mehr als 60 Gew.% und 99 Gew.% oder weniger des Block-Copolymers auf Olefin-Basis (B) umfasst (wobei die Gesamtmenge des Polymers auf Propylen-Basis (A) und des Block-Copolymers auf Olefin-Basis (B) 100 Gew.% beträgt.

4. Harzzusammensetzung auf Basis von Propylen gemäß Anspruch 1, wobei die Polymersegmente (B1), (B1') und (B2) durch Polymerisation in Gegenwart eines Katalysators zur Olefin-Polymerisation, umfassend eine Übergangsmetallverbindung, die durch die folgende Formel (1) dargestellt wird, erhalten werden:

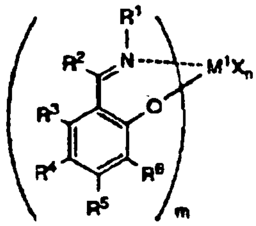

··· (1)

wobei $M^1$ ein Übergangsmetallatom, ausgewählt aus den Gruppen 4 bis 5 des Periodensystems, darstellt,
m 1 oder 2 darstellt,
$R^1$ eine aromatische Kohlenwasserstoffgruppe, eine aliphatische Kohlenwasserstoffgruppe oder eine alicyclische Kohlenwasserstoffgruppe darstellt, wobei in dem Fall, dass $R^1$ eine Phenylgruppe ist, diese wenigstens einen Substituenten in wenigstens einer Position der Positionen 2 und 6 aufweist, der ausgewählt aus Heteroatomen und Heteroatom-haltigen Gruppen, oder diese wenigstens einen Substituenten in wenigstens einer der Positionen 3 bis 5 aufweist, der ausgewählt ist aus einem Heteroatom ausschließlich einem Fluoratom, einer Fluor-haltigen Gruppe, die ein Kohlenstoffatom und 2 oder weniger Fluoratome enthält, einer Fluor-haltigen Gruppe, die 2 oder mehr Kohlenstoffatome enthält, und einer Gruppe, die wenigstens ein Heteroatom ausschließlich einem Fluoratom enthält, wenn die Position des Kohlenstoffatoms, das an den Stickstoff gebunden ist, als Position 1 genommen wird, und in dem Fall, dass $R^1$ eine von einer Phenylgruppe, einer aliphatischen Kohlenwasserstoffgruppe oder einer alicyclischen Kohlenwasserstoffgruppe verschiedene aromatische Kohlenwasserstoffgruppe ist, diese wenigstens einen Substituenten aufweist, der ausgewählt ist aus Heteroatomen und Heteroatom-haltigen Gruppen,
$R^2$ bis $R^5$ unabhängig voneinander ein Wasserstoffatom, ein Halogenatom, eine Halogen-haltige Gruppe, eine Kohlenwasserstoffgruppe, eine Kohlenwasserstoffsubstituierte Silylgruppe, eine Sauerstoff-haltige Gruppe, eine Stickstoff-haltige Gruppe oder eine Schwefel-haltige Gruppe darstellen, die gleich oder voneinander verschieden sein können,
$R^6$ ein Halogenatom, eine Halogen-haltige Gruppe, eine Kohlenwasserstoffgruppe oder eine Kohlenwasserstoffsubstituierte Silylgruppe darstellt,
n eine Zahl ist, die die Valenz von M sättigt,
X ein Sauerstoffatom, ein Wasserstoffatom, ein Halogenatom, eine Kohlenwasserstoffgruppe, eine Sauerstoff-haltige Gruppe, eine Schwefel-haltige Gruppe, eine Stickstoff-haltige Gruppe, eine Bor-haltige Gruppe, eine Aluminium-haltige Gruppe, eine Phosphor-haltige Gruppe, eine Halogen-haltige Gruppe, ein Rest einer heterocyclischen Verbindung, eine Silicium-haltige Gruppe, eine Germanium-haltige Gruppe oder eine Zinnhaltige Gruppe darstellt, und die mehreren durch X dargestellten Gruppen gleich oder voneinander verschieden sein können und unter Ringbildung aneinander gebunden sein können, wenn n 2 oder mehr beträgt.

5. Geformtes Produkt, das die Harzzusammensetzung auf Basis von Propylen gemäß einem der Ansprüche 1 bis 4 umfasst.

6. Geformtes Produkt gemäß Anspruch 5, wobei das geformte Produkt ein Extrusions-geformtes Produkt oder ein blasgeformtes Produkt ist.

7. Geformtes Produkt gemäß Anspruch 5 oder 6, wobei das geformte Produkt ein Film oder eine Bahn ist.

8. Geformtes Produkt gemäß einem der Ansprüche 5 bis 7, wobei das geformte Produkt ein geformtes Produkt zur medizinischen Verwendung ist.

9. Geformtes Produkt gemäß einem der Ansprüche 5 bis 7, wobei das geformte Produkt ein geformtes Produkt zur

Lebensmittelverpackung ist.

**10.** Harzzusammensetzung auf Propylen-Basis, die umfasst:

[A] 1 bis 99 Gew.% eines Polymers auf Propylen-Basis (A) (i) mit einer Schmelzflussrate (MFR: 230°C und eine Last von 2,16 kg) von 0,1 bis 400 g/10 min, (ii) enthaltend 0,01 bis 30 Gew.% der in n-Decan bei normaler Temperatur löslichen Komponente mit einer Grenzviskosität [η], gemessen in Decalin bei 135°C, von 0,2 bis 10 dl/g und (iii) mit einer Pentaden-Isotaktizität ($I_5$), gemessen durch $^{13}C$-NMR-Spektralanalyse der in n-Decan bei normaler Temperatur unlöslichen Komponente von 0,95 oder mehr; und
[BB] 99 bis 1 Gew.% eines Block-Copolymers auf Olefin-Basis (B) umfassend Polymersegmente (B1), (B1') und (B2), in dem die Polymersegmente (B1) und (B1') jeweils unabhängig voneinander ein Polymer wenigstens eines Monomers ausgewählt aus der Gruppe bestehend aus Ethylen und α-Olefin mit 3 bis 20 Kohlenstoffatomen sind und jeweils unabhängig voneinander ein Polymersegment eines Polymers auf Ethylen-Basis mit (i) einem Ethylengehalt von 95 bis 100 Mol% und (ii) einem gewichtsmittleren Molekulargeweicht (Mw), gemessen durch Hochtemperatur-GPC, von 2.000 bis 100.000 sind; und in dem das Polymersegment (B2) ein Copolymer von Ethylen und wenigstens einem ausgewählt aus einem α-Olefin mit 3 bis 20 Kohlenstoffatomen ist und ein Polymersegment eines Ethylen/α-Olefin-Copolymers mit (iii) einem Ethylengehalt von 50 bis 80 Mol% und (iv) einem gewichtsmittleren Molekulargewicht (Mw), gemessen durch Hochtemperatur-GPC, von 10.000 bis 300.000 ist,

wobei das Olefin-Block-Copolymer ein Block-Copolymer umfassend eine lineare Triblock-Struktur von (B1)-(B2)-(B1') ist und (v) in seinem $^{13}C$-NMR-Spektrum einen dem ββ-Methylen zugeordneten Peak, (vi) eine Glasübergangstemperatur (Tg), gemessen durch Differential-Raster-Kalorimetrie (DSC), von -50°C oder weniger, (vii) einen durch DSC gemessenen endothermen Peak, der einem Schmelzpunkt (Tm) von 105°C oder mehr zugeordnet wird, (viii) eine endotherme Enthalpie, bestimmt aus der durch DSC gemessenen Schmelzpeakfläche, in einem Bereich von 20 bis 60 J/g, (ix) eine Dichte von 0,870 bis 0,910 g/cm$^3$, (x) eine Schmelzflussrate (MFR: 190°C und eine Last von 2,16 kg) im Bereich von 0,3 bis 50 g/10 min, und (xi) ein Verhältnis ((G'$_{50}$°C)/(G'$_{100}$°C)) des Speicherelastizitätsmoduls bei Raumtemperatur (G'$_{50}$°C) zum Speicherelastizitätsmodul bei 100°C) (G'$_{100}$°C), bestimmt durch Feststoffviskoelastizitätsmessungen, von 1,0 bis 2,0 aufweist (wobei die Gesamtmenge des Polymers auf Propylen-Basis (A) und des Block-Copolymers auf Olefin-Basis (BB) 100 Gew.% beträgt).

**11.** Geformtes Produkt, das die Harzzusammensetzung auf Basis von Propylen gemäß Anspruch 10 umfasst.

## Revendications

**1.** Composition de résine à base de propylène qui comprend :

[A] 1 à 99% en poids d'un polymère à base de propylène (A) (i) ayant un indice de fluidité (MFR : 230°C et une charge de 2,16 kg) de 0,1 à 400 g/1.0 min, (ii) contenant 0, 07. à 30% en poids du composant soluble dans le n-décane à température normale ayant une viscosité intrinsèque (η), telle que mesurée dans la décaline à 135°C, de 0,2 à 10 dl/g, et (iii) ayant une isotacticité de pentade ($I_5$), telle que déterminée par analyse des spectres de RMN du $C^{13}$ du composant insoluble dans le n-décane à température normale, de 0,95 ou plus ; et
[B] 99 à 1% en poids d'un copolymère à blocs à base d'oléfine (B) comprenant des segments polymères (B1), (B1') et (B2), dans lequel les segments polymères (B1) et (B1') sont chacun indépendamment un polymère d'au moins un monomère choisi parmi le groupe consistant en l'éthylène et une α-oléfine ayant 3 à 20 atomes de carbone et sont chacun indépendamment un segment polymère d'un polymère à base d'éthylène ayant (i) la teneur en éthylène de 95 à 100% en moles et (ii) un poids moléculaire moyen en poids (Mw), tel que mesuré par GPC à haute température, de 2 000 à 100 000 ; et dans lequel le segment polymère (B2) est un copolymère d'éthylène et d'au moins un choisi parmi une α-oléfine ayant 3 à 20 atomes de carbone et est un segment polymère d'un copolymère d'éthylène/α-oléfine ayant (iii) la teneur en éthylène de 50 à 80% en moles et (iv) un poids moléculaire moyen en poids (Mw), tel que mesuré par GPC à haute température, de 10 000 à 300 000,

lequel copolymère à blocs d'oléfine est un copolymère à blocs comprenant une structure tribloc linéaire de (B1)-(B2)-(B1') et a (v) un pic attribué au méthylène ββ dans son spectre de RMN du $C^{13}$, (vi) une température de transition vitreuse (Tg), telle que mesurée par analyse calorimétrique à balayage (DSC), de -50°C ou moins, (vii) un pic endothermique attribué à un point de fusion (Tm) de 105°C ou plus tel que mesuré par DSC, (viii) une enthalpie endothermique, telle que déterminée à partir d'une zone de pic de fusion, telle que mesurée par DSC, dans la plage

de 20 à 60 J/g, (ix) une densité de 0,870 à 0,910 g/cm$^3$, (x) un indice de fluidité (MER : 190°C et une charge de 2,16 kg) dans la plage de 0, 3 à 50 g/10 min, et (xi) un rapport ((G'$_{50}$°C)/(G'$_{100}$°C)) d'un module d'élasticité au stockage à la température ambiante (G'$_{50}$°C) sur un module d'élasticité au stockage à 100°C (G'$_{100}$°C), tel que déterminé par des mesures de la viscoélasticité des solides, de 1,0 à 2,0 (dans laquelle la quantité totale du polymère à base de propylène (A) et du copolymère à blocs à base d'oléfine (B) est 100% en poids).

**2.** Composition de résine à base de propylène selon la revendication 1, qui comprend 90 à 99% en poids du polymère à base de propylène (A) et 60 à 1% en poids du copolymère à blocs à base d'oléfine (B) (dans laquelle la quantité totale du polymère à base de propylène (A) et du copolymère à blocs à base d'oléfine (B) est 100% en poids), et n'inclut sensiblement pas une charge inorganique (D) .

**3.** Composition de résine à base de propylène selon la revendication 1, qui comprend 1% en poids ou plus et moins de 40% en poids du polymère à base de propylène (A) et plus de 60% en poids et 99% en poids ou moins du copolymère à blocs à base d'oléfine (B) (dans laquelle la quantité totale du polymère à base de propylène (A) et du copolymère à blocs à base d'oléfine (B) est 100% en poids).

**4.** Composition de résine à base de propylène selon la revendication 1, dans laquelle les segments polymères (B1), (B1') et (B2) sont obtenus par polymérisation en présence d'un catalyseur pour une polymérisation d'oléfine comprenant un composé d'un métal de transition représenté par la formule (1) suivants :

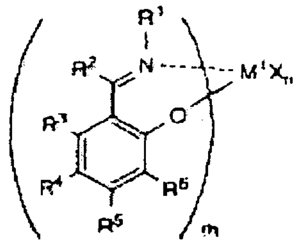

··· (1)

dans laquelle M$^1$ représente un atome d'un métal de transition choisi parmi les Groupes 4 à 5 du Tableau Périodique, m représente 1 ou 2, R$^1$ représente un groupe hydrocarbure aromatique, un groupe hydrocarbure aliphatique ou un groupe hydrocarbure alicyclique, dans laquelle, dans le cas où R$^1$ est un groupe phényle, il a au moins un substituant qui est choisi parmi des hétéroatomes et des groupes contenant des hétéroatomes dans au moins une position parmi les Positions 2 et 6, ou bien il a au moins un substituant qui est choisi parmi un hétéroatome à L'exclusion d'un atome de fluor, un groupe contenant du fluor qui contient un atome de carbone et deux atomes de fluor ou moins, un groupe contenant du fluor qui contient deux atomes de carbone ou plus et un groupe qui contient un hétéroatome à l'exclusion d'un atome de fluor, dans au moins une position parmi les Positions 3 à 5, lorsque l'emplacement de l'atome de carbone qui est lié à l'azote est considéré comme la Position 1, et dans le cas où R$^1$ est un groupe hydrocarbure aromatique autre qu'un groupe phényle, un groupe hydrocarbure aliphatique ou un groupe hydrocarbure alicyclique, il a au moins un substituant qui est choisi parmi des hétéroatomes et des groupes contenant des hétéroatomes, R$^2$ à R$^5$ représentent indépendamment un atome d'hydrogène, un atome d'halogène, un groupe contenant un halogène, un groupe hydrocarbure, un groupe silyle substitué par un hydrocarbure, un groupe contenant de l'oxygène, un groupe contenant de l'azote ou un groupe contenant du soufre, qui peuvent être identiques ou différents les uns des autres, R$^6$ représente un atome d'halogène, un groupe contenant un halogène, un groupe hydrocarbure, un groupe silyle substitué par un hydrocarbure, n est un nombre qui satisfait à la valence de M, X représente un atome d'oxygène, un atome d' hydrogène, un atome d'halogène, un groupe hydrocarbure, un groupe contenant de l'oxygène, un groupe contenant du souffre, un groupe contenant de l'azote, un groupe contenant du bore, un groupe contenant de l'aluminium, un groupe contenant du phosphore, un groupe contenant un halogène, un résidu d'un composé hétérocyclique, un groupe contenant du silicium, un groupe contenant du germanium ou un groupe contenant de l'étain, et dans le cas où n est 2 ou plus, les groupes multiples représentés par X peuvent être identiques ou différents les uns des autres, et peuvent être liés les uns aux autres pour former un cycle.

**5.** Produit moulé qui comprend la composition de résine à base de propylène selon l'une quelconque des revendications 1 à 4.

**6.** Produit moulé selon la revendication 5, dans lequel le produit moulé est un produit moulé par extrusion ou un produit moulé par gonflage.

**7.** Produit moulé selon la revendication 5 ou 6, dans lequel le produit moulé est un film ou une feuille.

**8.** Produit moulé selon l'une quelconque des revendications 5 à 7, dans lequel le produit moulé est un produit moulé pour une utilisation médicale.

**9.** Produit moulé selon l'une quelconque des revendications 5 à 7, dans lequel le produit moulé est un produit moulé pour un emballage alimentaire.

**10.** Composition de résine à base de propylène qui comprend :

[A] 1 à 99% en poids d'un polymère à base de propylène (A) (i) ayant un indice de fluidité (MFR : 230°C et une charge de 2,16 kg) de 0,1 à 400 g/10 min, (ii) contenant 0,01 à 30% en poids du composant soluble dans le n-décane à température normale ayant une viscosité intrinsèque (η), telle que mesurée dans la décaline à 135°C:, de 0, 2 à 10 dl/g, et (iii) ayant une isotacticité de pentade ($I_5$), telle que déterminée par analyse des spectres de RMN du $C^{13}$ du composant insoluble dans le n-décane à température normale, de 0,95 ou plus ; et
[BB] 99 à 1% en poids d'un copolymère à blocs à base d'oléfine (BB) comprenant des segments polymères (B1) (B1') et (B2), dans lequel les segments polymères (B1) et (B1') sont chacun indépendamment un polymère d'au moins un monomère choisi parmi le groupe consistant en l'éthylène et une α-oléfine ayant 3 à 20 atomes de carbone et sont chacun indépendamment un segment polymère d' un polymère à base d'éthylène ayant (i) la teneur en éthylène de 95 à 100% en moles et (ii) un poids moléculaire moyen en poids (Mw), tel que mesuré par GPC à haute température, de 2 000 à 100 000 ; et dans lequel le segment polymère (B2) est un copolymère d'éthylène et d'au moins un choisi parmi une α-oléfine ayant 3 à 20 atomes de carbone et est un segment polymère d'un copolymère d'éthylène/α-oléfine ayant (iii) la teneur en éthylène de 50 à 80% en moles et (iv) un poids moléculaire moyen en poids (Mw), tel que mesuré par GPC à haute température, de 10 000 à 300 000,

lequel copolymère à blocs d'oléfine a (v) un pic attribué au méthylène ββ dans son spectre de RMN du $C^{13}$, (vi) une température de transition vitreuse (Tg), telle que mesurée par analyse calorimétrique à balayage (DSC), de -50°C ou moins, (vii) un pic endothermique attribué à un point de fusion (Tm) de 105°C ou plus tel que mesuré par DSC, (viii) une enthalpie endothermique, telle que déterminée à partir d'une zone de pic de fusion, telle que mesurée par DSC, dans la plage de 20 à 60 J/g, (ix) une densité de 0,870 à 0,910 g/$cm^3$, (x) un indice de fluidité (MFR : 190°C et une charge de 2,16 kg) dans la plage de 0,3 à 50 g/10 min, et (xi) un rapport (($G'_{50}$°C)/($G'_{100}$°C)) d'un module d'élasticité au stockage à la température ambiante ($G'_{50}$°C) sur un module d'élasticité au stockage à 100°C ($G'_{100}$°C), tel que déterminé par des mesures de la viscoélasticité des solides, de 1,0 à 2,0 (dans laquelle la quantité totale du polymère à base de propylène (A) et du copolymère à blocs à base d'oléfine (B) est 100% en poids).

**11.** Produit moulé qui comprend la composition de résine à base de propylène selon la revendication 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004204057 A
- WO 200155231 A
- WO 9830612 A


### Non-patent literature cited in the description


- **A. Zambelli et al.** *Macromolecules,* 1973, vol. 6, 925
- *Macromolecules,* 1975, vol. 8, 687
- **Lindemane Adams.** *Analysis Chemistry,* 1971, vol. 43, 1245
- **JC Randall.** *Review Macromolecular Chemistry Physics,* 1989, vol. C29, 201
- *Chemical Review,* 1988, vol. 88, 1405
- *Chemical Review,* 1993, vol. 93, 927